(19) Europäisches Patentamt
European Patent Office
Office européen des brevets

(11) **EP 4 290 423 A1**

(12) **EUROPEAN PATENT APPLICATION**

(43) Date of publication:
**13.12.2023 Bulletin 2023/50**

(21) Application number: **22305819.9**

(22) Date of filing: **07.06.2022**

(51) International Patent Classification (IPC):
**G06N 10/40** (2022.01)   **G06N 20/20** (2019.01)
**G06N 3/08** (2023.01)    **G06N 3/04** (2023.01)
**G06N 20/10** (2019.01)

(52) Cooperative Patent Classification (CPC):
**G06N 20/20; G06N 3/09; G06N 10/40;** G06N 3/045;
G06N 20/10

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Pasqal**
**91300 Massy (FR)**

(72) Inventors:
• **HENRY, Louis-Paul**
**91300 MASSY (FR)**
• **DA SILVA COELHO, Wesley**
**91300 MASSY (FR)**
• **D'ARCANGELO, Mauro**
**91300 MASSY (FR)**

(74) Representative: **Slingsby Partners LLP**
**1 Kingsway**
**London WC2B 6AN (GB)**

(54) **METHOD FOR GENERATING ONE OR MORE CONTROL SIGNALS FOR OPERATING AN ANALOGUE QUANTUM COMPUTER**

(57)     There is presented a method for generating one or more control signals for operating an analogue quantum computer, AQC. The AQC comprises a plurality of position-controlled matter-particles; wherein at least one control signal is for controlling an electromagnetic, EM, source for imparting EM radiation to the matter-particles.

The method comprises using an artificial intelligence, AI, method to generate at least one control signal for the EM source; wherein the AI method is developed using at least one of: data output from applying previous EM radiation to the AQC; or, data output from emulating, on a classical computer, the application of EM radiation to the AQC.

Fig. 11

EP 4 290 423 A1

**Description**

<u>Field</u>

The field of the invention is in quantum computing, in particular analogue quantum computing using neutral atoms.

<u>Background</u>

Quantum computing has been discussed as being a future of computing in particular for areas such as simulating quantum systems and factoring large numbers. The main goals of quantum computing are usually described to be 'quantum advantage' and 'quantum supremacy'. Quantum advantage is where the speed of the computation is faster for the quantum computing system than the classical computing system whilst quantum supremacy is the goal of showing the quantum computing system can solve a problem that is not solvable on a classical computer in a useful time frame.

There are several core principles that differentiate a classical computing system from a quantum computing system. The main one is that whilst classical computers utilise classical binary bits '0' and '1', quantum computing systems utilise states represented by a superposition of a plurality of orthogonal (and normalised) states. These orthogonal states are often called basis states. When limited to a two-level quantum system this state is called a qubit. Such quantum superpositions have no analogue in classical bits. The general pure qubit state $|\psi>$ can be represented by Equation 1.

$$|\psi\rangle = \alpha|0\rangle + \beta|1\rangle$$

[Equ. 1]

Where $\alpha$ and $\beta$ are complex coefficients that are normalised such that $\alpha^2 + \beta^2 = 1$ and $|0>$ and $|1>$ are the basis vectors (basis states) of the qubit. The classical 0 and 1 of conventional computers are special examples of qubits where $\alpha = 1$ and $\beta = 0$ for the measured state '0' and where $\alpha = 0$ and $\beta = 1$ for the measured state '1'. Other qubits whose values of $\alpha$ and $\beta$ are greater than 0 and less than 1 give rise to quantum superposition whereby there is a finite chance to yield either state upon measurement.

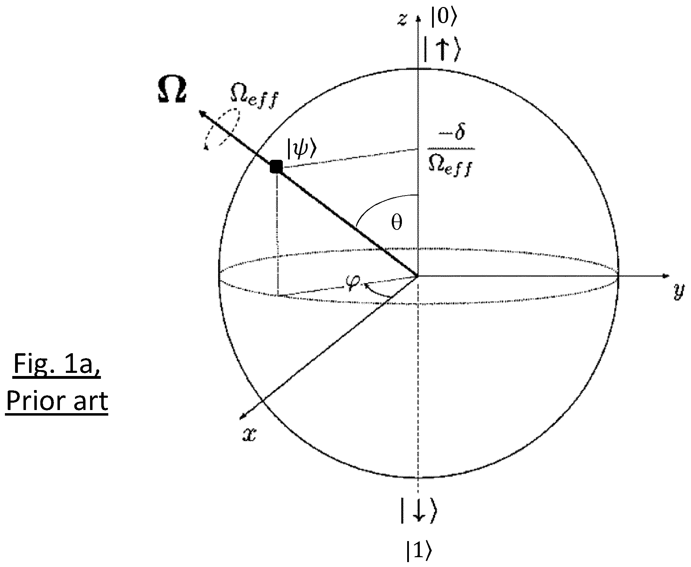

The coefficients $\alpha$ and $\beta$ of the qubit are complex numbers and are more generally represented on the Bloch sphere shown in figure 1a and by equations 2 and 3 where $e^{(i\phi)}$ represents relative phase and global phase is represented by $e^{(i\gamma)}$. The classical states $|0>$ and $|1>$ are shown on the Bloch sphere as being the point where the sphere intersects the Z axis, wherein these classical states are also alternatively labelled by up and down arrows to accord with an alternative qubit nomenclature. For a pure qubit state $|\psi>$, $\theta$ and $\phi$ are the angles on the Bloch sphere representation wherein $0 \le \theta \le \pi$ and $0 \le \phi \le 2\pi$. The points on the surface of the Bloch sphere are pure states of the quantum system whilst interior points are mixed states.

$$\alpha = e^{i\gamma}cos\frac{\theta}{2}$$

$$\beta = e^{i(\gamma+\phi)}sin\frac{\theta}{2}$$

[Equ. 2, 3]

A parametrised form of Equation 1 is shown in Equation 4. Because the physics of quantum systems representing single qubits only considers relative phase, the coefficient of $|0>$ is real and non-negative so a qubit can be generally represented by equation 4.

$$|/\psi = cos\frac{\theta}{2}\,|0\rangle + e^{i(\phi)}sin\frac{\theta}{2}\,|1\rangle$$

[Equ. 4]

Therefore, as described above, for example a qubit state with a 100% probability of measuring the state of 1 has θ = π, hence a coefficient β of 1 and a coefficient α of 0. Such a qubit state is equivalent to a classical computing state of 1. However, a qubit state with a 50% chance of being in either basis state 0 or 1, when measured and assuming no relative phase, may have pre-measurement qubit coefficients defined by Equation 5.

$$\alpha = \beta = \frac{1}{\sqrt{2}}$$

[Equ. 5]

(i.e., $\alpha^2 = \beta^2 = 1/2$)

In the Bloch sphere representation, a state stays in this superposition until either a measurement is made on the qubit, which collapses the qubit into the classical regime, or an operation is applied to the qubit to change its projection on the Bloch sphere. Until the qubit is measured it exists in all states permitted by the qubit superposition. Indeed, qubits that represent different states in the quantum realm may yield the same physical value when measured. However, when in a superposition state (pre-measurement) the different phases of the qubits may be utilised in the quantum circuit to effect different operations.

Several approaches for realising quantum computation are being investigated in the field, both in terms of the computing technique and the technologies required to implement them. There are a number of different hardware platforms currently being developed to implement quantum computers. Technologies being utilised include ion traps, superconducting qubits, atomic-scale solid-state defects, neutral atoms and photonics.

In classical computers, a bit is physically represented by the voltage across a semiconductor transistor. In quantum computers, qubits are implemented using two level quantum states, which are specific to the exact implementation and physical system being used. Examples of quantum states for fermions are the spin up and spin down of an electron or the hyperfine states of atomic energy levels.

In addition to several competing hardware platforms, there are also a number of different paradigms for performing the quantum computation itself. These include using quantum gates (in the 'gate model') and cluster (or graph) states (in the measurement-based computing model), as well as others. A sequence of quantum gates, such as the Hadamard and CNOT gates that act upon qubits is termed a quantum circuit.

Another paradigm is quantum analogue computing wherein the qubits evolve under a tailored Hamiltonian H and the wavefunction of the system follows the Schrodinger equation. At the end of the qubit evolution the qubits are measured.

As discussed above, one hardware solution to implementing a quantum computer is the neutral atom system. In this system a plurality of atoms are spatially separated from each other and, each held in a different position about a spatial extent, often forming a spatial array. The atoms are close enough to each other such that entanglement operations are possible. Input signals are used to control the quantum state of atoms.

Analogue Quantum Computers may be used in machine learning applications and to solve various combinatorial problems such as NP and NP-hard problems. Such problems may be addressed using graph theory.

In particular, analogue quantum computers have been used to address many areas such as graph kernels for machine learning as described in "Quantum evolution kernel: Machine learning on graphs with programmable arrays of qubits" by Louis-Paul Henry et al., arXiv:2107.03247v1. In this paper there is presented a procedure for measuring the similarity between graph-structured data, based on the time-evolution of a quantum system. By encoding the topology of the input graph in the Hamiltonian of the system, the evolution produces measurement samples that retain key features of the data. Other application of quantum computing to Machine Learning include that proposed in "Quantum Circuit Learning" by K. Mitarai et al., arXiv:1803.00745v3. This paper proposes a classical-quantum hybrid algorithm for machine learning on near-term quantum processors, which are termed 'quantum circuit learning'.

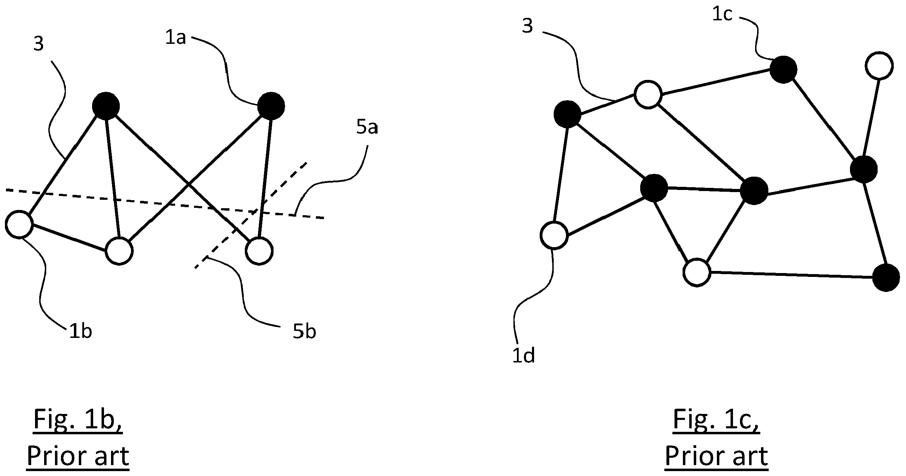

The Maximum Cut or "Max-Cut" problem is an example of an NP complete problem. The Max-Cut problem may be described such that: for a given set of nodes with a given set of edges, which cut, divides the nodes into two groups A and B, and maximizes the number of edges connecting the nodes in A to nodes in B.? Figure 1b shows an example of this graph problem wherein one group of nodes 1a are denoted by black circles whilst the other group 1b are denoted by white circles. Edges 3 link nodes in the graph. The group has been divided by the max-cut line 5a which goes through five edges. Other cut lines such as 5b may exist but are no max-cut because, for example line 5b only goes through two edges. Max-Cut problems may be useful in different applications including but not limited to network design, statistical physics and VLSI design, circuit layout design and data clustering.

The Maximum Independent Set or "MIS" problem is another example of a NP-hard problem. The MIS problem may be described such that: for a given set of nodes with a given set of edges, which subset of nodes can be chosen such that each node in the subset is not connected by one edge, to the other nodes in the subset and such that no other subset contains a larger number of nodes? Figure 1c shows an example of this graph problem wherein one group of nodes 1c are denoted by black circles whilst the other group 1d are denoted by white circles. Edges 3 link nodes in the graph. The nodes have been divided into the two subgroups such that nodes in subset 1d only connect to each other via connecting through edges via at least one of the nodes of the other set 1c. MIS problems may be useful in different applications including but not limited to real world optimization problems.

Previous attempts have been made to solve graph problems, such as MIS, using quantum computers including "Quantum Optimization for maximum Independent Set Using Rydberg Atom Arrays" by Hannes Pichler et al., arXiv:1808.10816v1, or Max-Cut "Demonstration of multi-qubit entanglement and algorithms on a programmable neutral atom quantum computer" by Graham et al., arXiv: 2112.14589. The first document describes that solution of MIS problems can be efficiently encoded in the ground state of interacting atoms in 2D arrays by utilizing the Rydberg blockade mechanism. The second document describes that solution of Max-Cut problems can be obtained by implementing digital quantum algorithms utilizing neutral-atom based quantum computers.

When quantum analogue computers are used in problems such as, but not limited to or MIS or Max-Cut, a number of parameters need to be optimised to input to the quantum system such that the quantum computer can provide a useful output. For a neutral atom analogue quantum computer this may be electromagnetic signal amplitude and frequency and inter-qubit distances. Establishing such parameters using trial and error may undesirably take a long time.

<u>Summary</u>

In a first aspect there is presented a method for generating one or more control signals for operating an analogue quantum computer, AQC; the AQC comprising a plurality of position-controlled matter-particles; wherein at least one control signal is for controlling an electromagnetic, EM, source for imparting EM radiation to the matter-particles; the method comprising using an artificial intelligence, AI, method to generate at least one control signal for the EM source; wherein the AI method is developed using at least one of:

   a) data output from applying previous EM radiation to the AQC; or
   b) data output from emulating, on a classical computer, the application of EM radiation to the AQC.

The first aspect may be adapted in any way including but not limited to any one or more of the following.

The matter particles may be neutral atoms, molecules or ions. The matter particles may be held in a pattern, or register, configuration wherein each matter particle is spaced out from the other matter particles. The register may be any of ID, 2D or 3D. The EM radiation may have a start time and stop time wherein the qubit measurements are taken from the matter particles after the EM radiation stop time. The matter particles may be position controlled such that the matter particles hold a static position for the duration that the EM radiation is imparted onto the matter particles. The matter particles may be held in a plurality of traps. The traps may comprise a plurality of trapping sites sized to trap a single matter particle. The traps may comprise any of: magnetic based traps and optical based traps. Matter particles may be moved between different traps to set up a final register before the EM radiation is imparted to the matter-particles. The moving of the matter particles may be accomplished using EM tweezers.

The EM source may comprise one or more EM sources. The EM sources may output EM radiation in pulses or continuous wave format. The EM sources may be controlled such that the output amplitude and wavelength and phase may vary during the duration of that the EM radiation is imparted onto the matter particles of the AQC. The control signals output by the method may be used to control the amplitude and wavelength of the one or more EM sources. The method may comprise outputting EM radiation is response to receiving the said control signals.

The method may be for operating the AQC for solving a combinatorial problem.

The combinatorial problem may be graph problems or non-graph problems such as 'Knapsack' and 'job-shop' problems.

The method may be for operating the AQC for solving a graph problem, wherein a plurality of the matter-particles represents the nodes and/or the edges of the graph.

The combinatorial problem may be any of: NP-hard, P-complete and NP-complete problems. The graph problem may comprise any of but not limited to: Max-Cut; MIS, Max-Clique.

The method may be configured such that the AI method comprises at least one of:

   i) a model trained using a supervised learning algorithm

   ii) a model trained using a reinforcement learning algorithm.

The supervised learning, SL, algorithm may use a regression method. The regression method may be a Multi-Target Regression (MTR). The SL algorithm may use an estimator method. The estimator method may comprise a Logistic Regressor estimator method

The reinforcement learning, RL, algorithm may be a Neural Network method.

The method may further comprise:

inputting data associated with the graph problem and the graph into the model; and,

outputting from the model, data associated with the control signals for controlling the EM source.

The data may comprise at least one, preferably both, of: a) a first set of Rabi-frequency data; b) a second set of detuning data. The data output may further comprise data for the time duration of the EM radiation. The method may convert the output data into further control signals for driving the one or more EM sources.

The method may be configured such that the EM radiation imparted on the matter particles is for transitioning the matter-particles between a first atomic state and a second state; the data output from the model comprises data associated with at least one of:

i) Rabi frequency associated with the first and second atomic states;

ii) detuning of the EM source wavelength from the transition frequency of first and second atomic states;

iii) the phase of the EM source.

The transition between the first atomic state and second atomic state may be associated with a Rydberg transition from a ground state of the matter particle to a Rydberg state of the matter particle. The transition between the first atomic state and second atomic state may be associated with a transition from a first Rydberg state of the matter particle to a second Rydberg state of the matter particle. The transition between the first atomic state and second atomic state may also be associated with a transition from a ground state of the matter particle to a hyperfine Rydberg state of the matter particle. The EM radiation may induce a Rydberg Blockade within the plurality of the matter particles.

The method may be configured such that the data associated with the control signals for controlling the EM source, that are output from the model, comprise data representing a time-sequence of values of the EM radiation.

The method may be configured such that:

i) the first state is a ground state;

ii) the second state is a Rydberg state.

The method may be configured such that the AQC comprises a neutral atom quantum computer.

The atoms used as the matter particles may be any of, but not limited to: rubidium, cesium, strontium, ytterbium, dysprosium.

The method may be configured such that:

the graph is a first graph associated with a first spatial configuration of the position-controlled matter-particles:

the AI method comprises a model;

the method comprising training the model using training data comprising any one or more of:

A) data associated with one or more second graphs different from the first graph;
B) data associated with the first graph and a second spatial configuration of the position-controlled matter-particles that is different to the first spatial configuration of the position-controlled matter particles.

The model may be trained on training data associated with any of, but not limited to: a plurality of graphs and/or matter-particle position configurations and/or EM radiation profiles. The training data may comprise data associated with the graph problem. The training data may be generated for a plurality of different graphs for the same problem associated with the first graph. The training data may comprise data associated with the EM radiation imparted to a plurality of different matter-particle position configurations. The training data may comprise data associated with multiple different EM radiation time-profiles imparted onto the same matter-particular position configuration.

The method may be configured such that the training data comprises a plurality of data subsets, each subset comprising:

data associated with the graph problem and at least one of the second graphs and,

data associated with the EM radiation for the said second graph for imparting to the AQC for encoding the graph problem onto the matter particles.

The method may be configured such that training the model comprises selecting a machine learning method from a plurality of machine learning methods based on a criteria associated with any one or more of:

i) graph size;

ii) graph order;

iii) number of matter-particles to represent the graph problem;

iv) matter-particle position configuration;

v) EM pulses for each second graph in the training data set:

vi) the problem to be solved

vii) time budget to generate the training data set.

viii) to which class the graph belongs.

A class may be classes such as, but not limited to: directed, acyclic, weighted.
The method may be configured such that the training the model comprises:

i) setting a register of the matter particles wherein the positions of the matter particles in the register is associated with the nodes of the second graph;

ii) running a plurality of quantum simulations on the AQC and/or emulations of the AQC, each simulation or emulation comprising: a) inputting a training EM signal; and, b) determining which matter particles are excited after the input of the training EM signal; each quantum simulation or emulation comprising a different training EM signal to the training EM signals of the other quantum simulations or emulations;

iii) selecting one or more of the quantum simulations and/or emulations from the plurality of quantum simulations and/or emulations based on the said determinations of excited matter particles;

iv) training the model using the selected one or more quantum simulations and/or emulations.

In a second aspect there is presented a method for training an AI model for use with an analogue quantum computer, AQC; the AQC comprising a plurality of position-controlled matter-particles;
the method comprising:

i) setting a register of the matter particles wherein the positions of the matter particles in the register is associated with the nodes of a graph;

ii) running a plurality of quantum simulations on the AQC and/or classical computer emulations of the AQC; each simulation or emulation comprising:

a) inputting a training Electro Magnetic, EM, signal; and,

b) determining the which matter particles are excited after the input of the training EM signal; each quantum simulation or emulation comprising a different EM signal to the EM signals of the other quantum simulations or emulations;

iii) selecting one or more of the quantum simulations and/or emulations from the plurality of quantum simulations and/or emulations based on the said determinations of excited matter particles;

iv) training the model using the selected one or more quantum simulations and/or emulations. The second aspect may be adapted in any way described herein.

In a third aspect there is further presented a method of training a machine learning, ML, model; the trained ML model for outputting parameters for controlling an Electro-Magnetic, EM, source wherein the EM source is for outputting EM radiation to the matter-particles of an Analogue Quantum computer, AQC; the method comprising:

i) determining one or more training instance data sets;
ii) select a Machine Learning, ML, method between at least a first and a second ML method;
iii) obtain parameters, for at least one training instance, the parameters associated with EM radiation for imparting to the matter-particles;
iv) train the selected ML model.

The third aspect may be adapted in any way including but not limited to any one or more of the following.

The trained model may output the parameters for solving a graph problem applied to any target graph. The parameters output by the trained model may be parameters for 'target' EM radiation for the solving the graph problem on a target graph. The 'target' graph meaning in this instance, the graph that the trained ML model may output data for, such as an EM profile data. The training instance data sets may be associated with one or more training graphs that might potentially be different to the target graph. The training instance sets may comprise data associated with any one or more of: i) a training graph, ii) a graph problem; iii) a configuration of the said matter particles associated with the training graph. The first machine learning method may be a supervised learning method. The second ML method may be a reinforcement learning method. The method may comprise determining the quality of a solution to the graph problem output by the AQC when EM radiation is imparted to the matter particles, according to a first one of the said instance data sets. The method may train the model by determining the quality of the solution on a plurality of instance data sets. The method may iteratively determine the quality of the plurality of the training instances. The method may comprise a stopping criterion for stopping the training. The method may generate further training instance data sets.

There is further presented a system for generating one or more control signals for operating an analogue quantum computer, the system comprising a processor and a memory, the memory comprising instructions that are executable by the processor to generate the control signals according to the method described above in the first aspect.

There is further presented a system for training an AI model, the system may comprise a processor and a memory, the memory comprising instructions that are executable by the processor to give effect to the method of the second aspect.

The method may be stored as a set of processor-executable instructions on a memory device, such as but not limited to a non-transient memory.

Brief description of the figures

Embodiments of the present invention will now be described in detail with reference to the accompanying drawings, in which:

Figure 1a shows the Bloch sphere;

Figure 1b shows an example of a graph with a Max-Cut solution applied;

Figure 1c shows an example of a graph with a MIS solution applied;

Figure 2a shows a schematic depicting a set-up for a neutral atom quantum computer;

Figure 2b shows an example of a set-up for a neutral atom quantum computer;

Figures 3a, 3b and 3c show examples of electron transitions between energy levels given particular EM inputs;

Figure 4a and 4b show an example of an electron transition leading to a Rydberg blockade;

Figure 5a shows an example of a matrix representing a graph problem;

Figure 5b-d show different graphical representations of the nodes in the matrix of figure 5a;

Figures 6a, 6b and 6c show different register atom positions for the same graph;

Figures 7a and 7b show the respective Rabi frequency time-profile and detuning time-profile for driving the AQC;

Figure 8 shows an example of a graph with different cuts;

Figures 9a and 9b shows sampled versions of the time profiles of figures 7a and 7b;

Figure 10 shows an example of solving max-cut graph problems, this example not forming part of the present invention;

Figure 11 shows an example of a method of generating training data;

Figure 12 shows an example of using the training data of figure 11 to train a model;

Figure 13 shows an example of using the model of figure 12;

Figure 14 shows an example of a graph depicting required training data sets for different accuracies;

Figure 15 shows an example of a flow chart for training a machine learning model;

Figure 16 shows an example of the distance, in terms of cost, between the optimal solution and the one found by the method presented herein;

Figure 17 shows a further example of generating a trained machine learning model.

Detailed description

There is presented a method for outputting signals for operating or otherwise controlling an analogue quantum computer. The quantum computer utilises matter-based qubits such as neutral atoms or ions. In the following description, reference is made to 'quantum computing' and 'quantum computer/s'. This form of computing is taken to be different to standard electronic computing or computers, which may be referred to as 'classical' computers. Examples of classical computing hardware and software that can be used with the method are provided elsewhere herein.

The method may generate one or more control signals for operating an analogue quantum computer, otherwise referred to as an AQC. The AQC comprises a plurality of position-controlled matter-particles. At least one control signal is for controlling an electromagnetic (EM) source for imparting EM radiation to the matter-particles. The method comprising using an artificial intelligence (AI) method to generate at least one control signal for the EM source. The AI method is developed using data output from applying previous EM radiation to the AQC or from emulating the AQC on a classical computer.

Emulating the AQC may be achieved using any AQC emulator run on one or more classical computers including, but not limited to partial differential equation solvers applied to the Schroedinger equation or master Lindblad equation, wherein the effect of applying a certain time-varying EM radiation to the matter-particle system is found as the solution to a complex partial differential equation describing the evolution of the matter-particle system over time. Emulation of an AQC can also be done by Trotterization of the quantum evolution operator, wherein the time-dependent EM radiation is split into many piecewise constant blocks whose effect on the matter-particle system can be computed using any time-independent quantum solver including, but not limited to, full quantum state vector evolution or tensor networks. The method may therefore utilise AI for determining EM control signals to control the AQC. Conventional methods to control AQCs go through numerous real iterations of EM inputs to determine which EM signal input can be used to allow the AQC to solve, or at least provide a near-optimal solution, to the problem. When the initial problem parameters change, for example the graph problem requires another graph node, conventional systems then go through another set of tests of input EM signals to determine the EM signal/s that can solve the new problem. In conventional systems, if the register is changed, even to represent the same graph as before, you have to do the classical optimization loop to find a good EM pulse shape.

Unlike this conventional method, the method presented herein uses AI to learn from at least one previous iteration of applying an EM signal to the AQC. There is therefore an overall time-saving, compared to conventional methods, when trying to determine the input EM profile to the AQC that will produce a useful solution. This learning feeds into the AI model so that, once trained, it can output appropriate EM signals to input to the AQC given a particular set of inputs to the model. This may be for the same problem or a different problem. The method may be used to train one model for each desired graph-problem type (for example one model for each of: MIS, max-cut, max-clique etc.). If the method uses Supervised Learning, a specific training data set may be provided for each of these desired models. Different AI methods may be used including, but not limited to, different machine learning (ML) methods. Nonlimiting examples of AI and ML methods that may be used are described elsewhere herein, but, for example, may include Supervised Learning (SL) and Reinforcement Learning (RL). The method, in some examples, may determine the use of one AI method over another AI method. This may be achieved by analysing any of the problem, graph and AQC system features.

The method may have a variety of application including, but not limited to: the automation of the parameter choices for creating pulse sequences on analogue quantum processes and, hence, solving hard/complex combinatorial/industrial problems in competitive runtime; MIS and Max-cut problems; QUBO optimization problems, Quantum Evolution Kernels (QEK).

The method may therefore provide AI, in particular, machine learning (ML) models trained to predict essential parameters used in the design of complex pulse sequences that act on programmable arrays of an AQC such as a neutral atom quantum computer. The parameters may be for a given set of matter particles and their related positions in the quantum processing unit (QPU). The trained model may be capable of automatically providing the Rabi frequency, detuning values and phase on different instants of the pulse as well as its total duration. Hence, the outcoming pulse is specifically tailored to find (near-) optimal solutions for a given combinatorial problem instance.

There now follows, underneath, two non-limiting examples to discuss the application of the method. For the first example, the method may be used to look at a whole class of similar problems, where the problems are all Max-Cut problems but differ by a change in the number of players and connections (hence graph nodes and edges). The method may start with a set of 4-node problems. This initial problems information is used by the system to determine which ML technique to use. Because 4-node problems have a relatively low number of nodes, the system may determine that an SL technique is to be used because the number of training examples needed to train the ML model is low. The method may then obtain training example data in any suitable way, including but not limited to: theoretically determining the training data; empirically determining the training data; looking up previously stored training data.

The method may then use the training examples for this initial problem in the SL model and train the model accordingly. The trained SL model may then be used on a different problem using, for example, 5-nodes wherein the problem is identical to the 4-node problem apart from one additional node with one additional edge connecting that node to one of the existing nodes of the 4-node problem. Even-though the 5-node problem is different to the 4-node training data set, the (now) trained SL model may still provide an output EM profile to input to the AQC that should produce a measured qubit solution that is, at least, near optimal because the SL model has already learned which aspects of the EM profile influence the behaviour of the qubits in a very similar quantum system set-up. Thus, the 5 node problem parameters are then input into the trained SL model. The SL model outputs an EM profile to input to the AQC wherein the solution output by the AQC, in the form of reading the qubits is useful.

In some circumstances the output from the trained model, although near optimal, may not be the best solution. In these circumstances, such a model may be retrained or further trained. For example, the output of the initially trained model for encoding the 5-node problem may be close to optimal but not optimal-enough, therefore the method may then use another ML method to optimise the EM profile to solve this 5-node problem. Such a further ML method may be an RL method, wherein the starting parameters input to the RL model are derived from the EM profile output for the 5-node problem using the 4-node SL model. In other words, the method may use the initial trained model to output a good starting point for training an ML model. The outputs from this further application of an RL method may be used to further refine the model. To predict pulses for bigger graphs, the method may train an SL model with a bigger training set, and/or a training set with similar graphs (in terms of order and size). RL models may typically be used when there is no training data set at all (or when there is a set of graphs to be used as a training data set, but there is no determined pulse shape for each graph). In other words, you don't 'teach' the model by giving it what is a good pulse for a given graph/register (as done with SL approaches).

With RL, the model may learns by itself what is a good (and a bad) EM pulse by trial and error. During the iterations of a RL process, we don't know the optimal solutions, we only know if the current solution given by the RL model is good/better or bad/worse.

For the second example, the method may be used to look at a whole class of similar problems, where the problems are all MIS problems but differ by a change in the number of players and connections (hence graph nodes and edges). The minimum number of instances of the problem set is 1000. The method determines that to get training set data to establish an SL model takes a long time. This may be determined in any way including estimating a time period using input data (such as average AQC run times) and comparing it to a threshold or other data. The method then determines that for this set of problems an RL method is used wherein an initial EM profile is input to the AQC and the resulting measured qubit output is used to feed back into the RL model with a cost penalty and/or reward to help optimise the RL model.

The above two examples may be adapted in any way including changing problem type and choice of AI models.

Any of the features of these examples may be used in other examples herein. The method may be implemented by a system that comprises classical computation features such as those listed elsewhere herein. The system may also, optionally, include the analogue quantum computer.

There now follows several further examples, underneath, for implementing the method in a neutral atom quantum computer, however other matter-based quantum computers may be used such as, but not limited to, ion-trap quantum computers. Example details are firstly given about a type of AQC usable with the method. After that then follows the operation of such an example AQC system and the type of quantum entanglement that may be used, including types of applicable Hamiltonians. After that, examples of the above method are then discussed.

General example of a neutral atom quantum computer system set-up

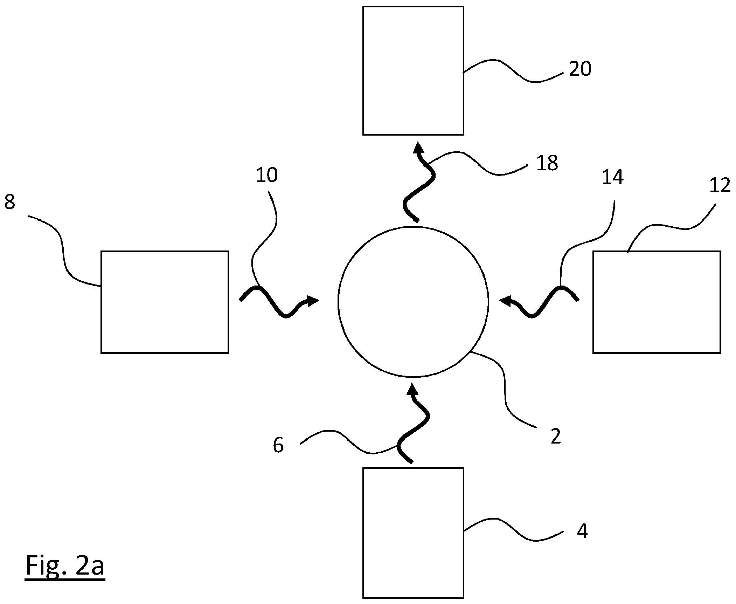

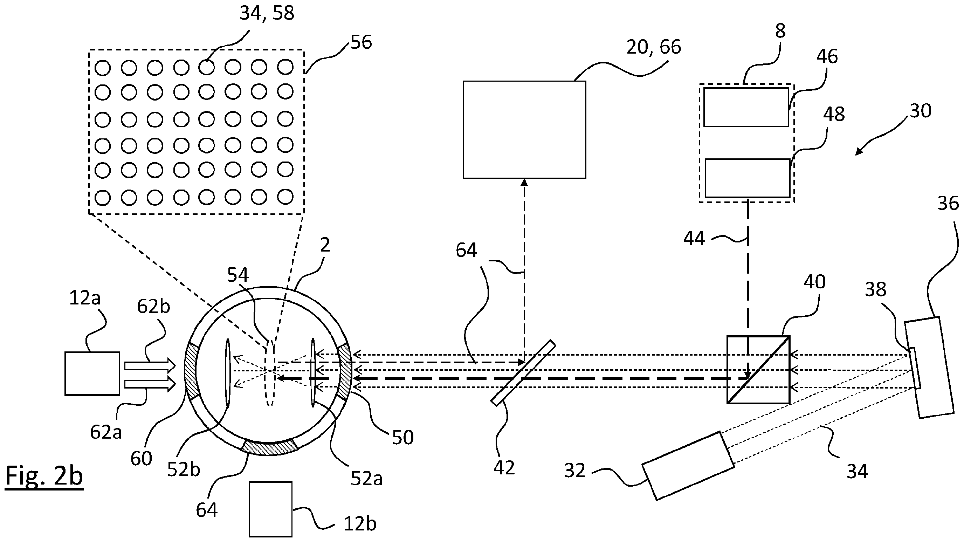

There now follows a discussion of an example analogue quantum computing system for use with the method. As discussed above, the method may in principle be applied to other analogue quantum computers such as ion trapped QCs. The method may be enacted by an apparatus, a system of components, a device or a plurality of devices. Figure 2a shows a general schematic of a set-up for neutral atom quantum computer. The set-up may be referred to as a 'quantum computing system'. Figure 2b shows a further, more detailed, example of such a set-up.

As a schematic, the positions and configurations of the elements in figure 2a are not supposed to imply any real-world size, positioning or configuration of features, but merely to illustrate an example of the key functioning components of a neutral atom quantum computing system that can be used with the methods discussed herein.

In figure 2a, a chamber 2 is provided that accommodates a plurality of atoms. The atoms are of the same element, hence are, from a chemical standpoint, identical when no external interactions are imposed upon them. The atoms are unbound to other atoms in the group, for example, by being in a gaseous matter state. Atoms used in the chamber 2, for trapping, positioning and atomic-state-manipulating may be any suitable atom, for example, but not limited to, any of Rubidium, Caesium, Strontium and Ytterbium. Other examples of particular elements or element groups are discussed elsewhere herein. Preferably the atoms used are those having one or two valence electrons such as alkali metals and alkali earth metals however others may also be used such as rare earth elements.

A group of the atoms are held by a holding apparatus 4. The holding apparatus 4 acts to isolate each individual atom such that each atom, in the group, is held in a different point in space (to the other atoms of the group) within the chamber 2. The term 'isolate' in this context means that the atoms are physically held away from each other, in space, and do not nominally interact (when in a non-excited atomic state) with adjacently held atoms of the same group. If the atoms are acted upon by an input stimulus such as, for example, an electromagnetic signal of one or more photons, held atoms may interact with other held atoms using particular physical effects such as, but not limited to, the Rydberg blockade. There may be a pattern of spatially separated traps. The pattern may be an array of regular or irregular spaced traps. The pattern may be 1D. The pattern may be 2D insofar that the traps in the pattern all align along one plane. The pattern may be 3D. An example of a set of traps is a 3D array of traps spaced periodically in all of X, Y and Z dimensions, for example a 3D grid. Other patterns are also possible. The spacing in one spatial dimension may be the same or different to the other spatial dimensions.

The holding apparatus 4 may act to maintain the atoms in their respective stationary positions using different mechanisms including, but not limited to, magnetics traps and optical traps. The holding apparatus 4 may provide a plurality of trap sites wherein, when first activated to output the traps, some trap sites are filled by one or more atoms whilst other trap sites are vacant. Preferably the holding apparatus 4 is configured to present trap sites that hold only one atom. In figure 2a we assume that the holding apparatus 4 uses one or more electromagnetic signals, such as optical signals 6, that are input into the chamber 2 to affect the optical traps. The electromagnetic signals may be any suitable wavelength, including but not limited to 800-1500nm, more preferably 820-880nm. Figure 2a shows the holding apparatus 4 being external to the chamber 2, however, the holding apparatus 4 may form part of the chamber 2 or be inside the chamber 2. Although only a single holding apparatus 4 is shown in figure 2a, it is envisaged that more than one holding apparatus 4 may be used.

An atom positioner 8 is also shown in figure 2a. The atom positioner 8 is an apparatus that is able to controllably move one or more held atoms from one spatial position to another spatial position. For example, the atom positioner 8 may move an atom trapped in one of the optical trap sites to another different trap site. Figure 2a shows the atom positioner 8 being external to the chamber 2, however, the atom positioner 8 may form part of the chamber 2 or be inside the chamber 2. Furthermore, the atom positioner 8 and holding apparatus 4 may be part of the same device or system for holding and moving the atoms. The atom positioner 8 may use different technologies to manipulate the position of the atoms including, but not limited to, moving the atoms using magnetic signals or electromagnetic signals such as optical signals. The electromagnetic signals may be any suitable wavelength including, but not limited to, 800-1500nm, more preferably 820 - 880nm. In figure 2a we assume that optical signals 10 are used such as, but not limited to, optical tweezers. Although only a single atom positioner 8 is shown in figure 2a, it is envisaged that more than one atom positioners 8 may be used.

An atomic state actuator 12 is also shown in figure 2a. This atomic state actuator 12 outputs one or more signals to control and manipulate the atomic states of one or more of the atoms in the chamber 2, preferably the trapped atoms, i.e., it actuates the transition between atomic states. The signals output by the atomic state actuator 12 are electromagnetic signals 14 of one or more photons. Different signals may be output by the atomic state actuator 12 including signals at different wavelengths. Each wavelength may correspond to (i.e., be resonant with) a different atomic transition. The atomic transition may occur through single-photon absorption or multiple-photon absorption, such as two-photon absorption. This may be accomplished using two different EM sources such as lasers or other EM sources. These two EM sources may have different wavelengths.

Although only a single atomic state actuator 12 is shown in figure 2a, it is envisaged that more than one atomic state actuator 12 may be used. For example, a first atomic state actuator 12 may output a different wavelength or set of wavelengths than a second atomic state actuator 12. The atomic state actuator may facilitate the transition between atomic states of a single trapped atom or a plurality of trapped atoms. For example, two or more, three or more, trapped atoms, or all of the trapped atoms. Figure 2a shows the atomic state actuator 12 being external to the chamber 2, however, the atomic state actuator 12 may form part of the chamber 2 or be inside the chamber 2. The electromagnetic wavelength for transitioning a rubidium atom to the Rydberg state may be 297nm. The electromagnetic wavelength for transitioning a Caesium atom to the Rydberg state may be 318.6nm.

Preferably any electromagnetic signals used to trap and move the atoms are preferably different, at least in wavelength, to the electromagnetic EM signals used to manipulate the quantum states of the atoms. In particular, any EM signals for trapping and moving the atoms are preferably off-resonance, i.e., the wavelength of the holding and positioning electromagnetic signals do not act to excite the atom between different atomic states.

A detector 20 is also shown in figure 2a. This detector 20 is used to monitor electromagnetic signals 18 output from the atoms in the chamber 2. This detector may comprise a camera. The camera may be used to image the fluorescence output by the atoms held by the holding apparatus 4. Figure 2a shows the detector 20 being external to the chamber 2, however, the detector 20 may form part of the chamber 2 or be inside the chamber 2.

An example of the general operation of the neutral atom quantum computing system may be as follows, wherein any of the following steps may be omitted, combined, rearranged in order, or adapted using features from other examples herein. Furthermore, other steps may be included before, at the same time, or after any of the steps listed below.

A) Firstly, the holding apparatus 4 emits signals into the chamber 2 to create a plurality of optical traps.
B) Some of the ensemble of atoms in the chamber 2 are automatically trapped by the plurality of traps.
C) The atom positioner 8 is then optionally used to move some, or all, of the trapped atoms between traps so that at least a particular set of the traps are each filled by an atom. This set of traps may be referred to as a 'register'. The detector 20 may be used in this process to help identify which traps are occupied or vacant. In some examples the atom positioner may not be required.
D) The atomic state actuator 12 outputs one or more electromagnetic signals 14 to control atomic state transitions of at least one of the atoms. This step may be performed a plurality of times to implement processing operations of the quantum computer, for example, time-sequentially inputting a plurality of electromagnetic signals that provide an amplitude-time profile and a frequency-time profile.
E) The detector 20 is used to determine the atomic states of the atoms after the signals in step D) have been performed.

The quantum system may be re-set by at least removing the traps. The quantum system may then be re-initialised for a further quantum computation by repeating steps A)-E) above for a further time period.

Any features described above in the above general example of a neutral atom quantum computer set-up of figure 2a, including but not limited to: the atoms used; the atomic state actuator 12; the atom positioner 8; the holding apparatus 4; the detector 20; the general operation; may be used with any other example presented herein.

Detailed example of a neutral atom quantum computer system set-up

Figure 2b shows a specific, non-limiting, example of a neutral atom quantum computing/system setup 30 that may be used with the method. The chamber 2 is a vacuum chamber and a dilute atomic vapour is formed inside the chamber 2. The chamber 2 is an ultra-high vacuum system operating at room temperature, however other environmental temperatures may be formed inside the chamber 2. Figure 2b is a more detailed example of figure 2a wherein like references in the figures represent like components.

This set-up may be adapted according to any teaching herein including, but not limited to, the features described above for figure 2a. The set-up in figure 2b may also be referred to as a 'quantum processor' or 'quantum system'. It is to be understood that the example in figure 2b is just one example of a set-up for a quantum processor and provides a 2D array of optical trapping sites, however other set-ups may be used, for example to implement a 3D array of trapping sites by including a plurality of the below-mentioned components and different component locations and/or configurations.

The example in figure 2b may also be adapted by removing components, adding components, combining components and re-positioning components.

In figure 2b a laser system 32, comprising a laser and beam-expanding optics, outputs a cross-sectionally-wide collimated laser beam 34 towards a spatial light modulator (SLM) 36. The SLM 36 and the laser system 32 being equivalent to the holding apparatus 4 in figure 2a. The SLM 36 comprises a 2D periodic array of controllable deformable mirrors 38 which receive the collimated beam 34 and selectively reflect portions of the beam 34 towards a polarising beam splitter (PBS) 40.

The SLM 36 outputs an adjustable phase pattern on the light 34, that in turn gets converted into an intensity pattern 58 by first lens 52a, as described later. The polarisation of the reflected portions of the beam 34 pass through the PBS 40 and propagate towards a dichroic mirror 42. It is understood that the laser system may have other components such as a polarisation rotator (not shown) for controllably adjusting the polarisation of output light 34 incident upon the SLM 36, so that the polarisation of light 34 is aligned to the transmission axis of the PBS 40.

The PBS 40 also receives electromagnetic signals 44 from an atom positioner 8 comprising a laser 46 and a 2D acousto-optic laser beam deflector 48 that receives laser light from the laser 46 and controls the direction of the laser light into the PBS 40. In turn, this allows the deflector 48 to use the laser light 44 as an optical tweezer or an array of optical tweezers. The light 44 output from the atom positioner 8 is reflected by the PBS 40 such that it is output from the PBS 40 along a substantially similar path to the light 34 output from the PBS 40 that originates from the laser system 32. The light beams 34 and 44 may at least partially overlap in space when output from the PBS 40. The light 44 originating from positioner 8 that is reflected and output by the PBS 40 is incident upon the dichroic mirror 42.

It is noted that the position and direction of light rays in figure 2b, such as beams 34 and 40, are shown spatially separate to each other, however this is merely for purposes of visual clarity in the figure and may not represent the beam positions in practice.

Both the light 44 and 34 output from the PBS pass through the dichroic mirror 42 and are incident upon window 50 of the chamber 2. The window 50 may be one of a plurality of windows in the chamber 2 that are at least partially transparent to the wavelengths of the light that are incident upon them that are generated by the electromagnetic sources of the system 30. The window 50 forms part of the body of the chamber 2 and is sealed with respect to the walls of the chamber such that the chamber 2 holds a vacuum environment within it. Other components may be associated with the vacuum chamber 2 by either being inside the chamber 2, integrated with the chamber 2 or immediately surrounding the chamber 2 insofar that the components may input stimuli into the chamber 2, such as electromagnetic fields or magnetic fields. One or more magnetic coils (not shown) may be included about the chamber 2 to provide a spatially-varying magnetic field that, with the laser light 34, acts to provide a magneto-optical trap (MOT). The laser light 34 may have a wavelength configured to cool the atoms via the mechanism of doppler cooling. The light 34 may be split and/or reflected by other optical components (not shown) to provide a plurality of beams propagating along different directions that intersect the trapping area 54. Such beams may be used to provide cooling in a plurality of directions such as along X, Y, and Z cartesian axes. Further laser light beams from one or more further sources may be used to cool and trap the atoms. The coils may comprise two coils in an anti-Helmholtz configuration that are used to generate a weak quadrupolar magnetic field to facilitate, with the laser light 34, the magneto-optical trap. The quantum system 30 may use different forms of trapping mechanisms and associated equipment to trap the neutral atoms, as known in the art, for example, but not limited to any of the trapping and cooling systems described in: "Harold J Metcalf and Peter van der Straten. Laser cooling and trapping of atoms. JOSA B, 20(5):887-908, 2003" the entire contents of which are included herein by reference.

Inside the chamber 2 are a pair of convex lenses 52a, 52b. The first lens 52a is positioned to receive light beams 34 and 44 passing through the window 50 and focus them both onto a trapping area 54 of minimum beam waist (i.e., at the focal plane of the lens 52a). The second lens 52b is located on the opposite side of the focal plane and captures light exiting the trapping area 54 and focusses or collimates the light into a plurality of light beams that may be incident upon: a beam dump inside the chamber 2 (not shown) or another chamber window 60 that allows the light to escape the chamber 2.

An expanded view 56 of the focal plane in area 54 is also shown in figure 2b wherein an array of optical trapping sites 58 are shown that are created from the mirrors 38 of the SLM 36 reflecting portions of the light 34.

Figure 2b further shows two atomic state actuators 12a/b that take the form of lasers that output light for manipulating the states of the atoms trapped at the trapping sites 58. In figure 2b, actuator 12a is a system comprising two lasers, each laser may outputting light 62a/b at two different wavelengths. Different wavelengths may match different atomic transitions of the atomic system (or 'ensemble') held in the chamber 2, alternatively a photon from each of the different wavelengths may be used in two photon absorption process. Alternatively, the two atomic state actuators 12a/b may output the same wavelength. In the alternative, a single atomic state actuator 12a may be used.

The light from the actuator 12a is incident upon a chamber window 60, through which the light travels and is incident upon the second lens 52b. The lens 52b, in turn focusses the light onto the atoms in the trapping sites 58. A further atomic state actuator 12b is shown positioned, about the plan view of the chamber 2, orthogonally to the first actuator 12a. This second actuator 12b may be substantially similar to the first actuator where a further chamber window 64 allows light output from the second actuator into the chamber 2. The second actuator 12b may be used to help address and manipulate atoms, particularly when the system provides a 3D array of optical traps. The optics for focussing light inside the chamber 2 from the second actuator is not shown in figure 2b.

It is to be understood that figure 2b and its accompanying description is an example of a setup for a neutral atom quantum computer. The atomic state actuators 12 may be positioned in different locations, including inside or outside the chamber 2 or part of the chamber 2. There may also be one or a plurality of different actuators 12. The actuators 12 may be integrated or otherwise co-located with other electromagnetic sources such as the laser 46 or laser system 32. It is also to be understood that the quantum system 30 may include other optical or electronic components and/or configurations to allow the neutral atoms to be addressed by the different electromagnetic sources.

Light, for example fluorescence, emitted by the trapped atoms may be output from the chamber 2 through any of the windows 50, 64, 60. In figure 2b, the light 64 emitted from the trapped atoms travelling out of the window 50 is, prior to exiting window 50, collimated by the first lens 52a. This light 64, once exited window 50, is incident upon the dichroic mirror 42. The mirror 42 reflects the emitted light 64 towards a camera 66 (which is equivalent to the detector in figure 2a). The camera may be an electron-multiplying charge-coupled-device (EMCCD) camera. The dichroic mirror may have an edge or pass-band characteristic filter response that substantially reflects emitted light 64 but substantially transmits light 34 and 40.

Figure 2b is shown as a collection, or system, of separate components, including bulk-optic devices wherein light is propagated between components using free-space propagation. It should be appreciated that other versions of the quantum system set-up 30 may be implemented using fibre-optics or integrated optic components.

The components of the quantum system 30, such as, but not limited to, laser system 32, atom positioner 8, camera 66, actuators 12a/b may be controlled by a classical computer system running one or more pieces of software and/or providing manual use input through an interface to control these components. Details of classical computer system features are provided elsewhere herein.

## Example of operating the quantum processor

There now follows an example of operating a quantum processor such as, but not limited to the set-up as shown in figure 2b. The atoms in this example are rubidium atoms, however other atoms may be used.

The atoms in the chamber 2 are initially not in an arrangement suitable for performing quantum computing operations. To get the atoms in an arrangement for quantum processing, a 3D MOT is initiated, as described above, wherein a cold ensemble of $10^6$ atoms with a $1mm^3$ volume is prepared inside the trapping area 54. This array of atoms may be referred to as a 'register' and steps of locating atoms in the trapping sites may be referred to as 'register loading'. The optical tweezers using light 44 isolate individual atoms in the ensemble. The trapping volume of a tweezer may be between $1\text{-}10\mu m^3$ or generally in the order of a few $\mu m^3$. Such a volume may trap at most one atom at a time. The number and arrangement of tweezers may be in any ID, 2D or 3D pattern. The tweezers may be tailored by holographic methods known in the art such as, but not limited to that described in: "Florence Nogrette, Henning Labuhn, Sylvain de Leseleuc, Thierry Lahaye and Antoine Browaeys. Synthetic three-dimensional atomic structures assembled atom by atom. Nature 561 (7721):79-82, September 2018"; the entire contents of which are included herein by reference.

When first initiated, the trapping sites of the register may each hold an atom, but in practice the sites will not all initially be occupied, for example only 50% may be occupied. This occupation may be in a non-ordered or random manner. As such a sub register may be formed from the initial register by determining which sites are occupied and then using the tweezer light beam to move atoms from one site to another so that at least one set of two or more trapping sites are occupied according to a predetermined arrangement, for example a 3D periodic grid of atom-occupied sites. Each site in the sub register holds a single atom, hence has unit filling. This may be referred to as being a defect-free sub-register wherein a defect is a site in the sub-register that is intended to be filled but is not, or conversely, a site that is intended to be unfilled but is filled. Other sub register atom arrangements are also possible.

To determine where the atoms are initially held in the register, the atoms are imaged by collecting their fluorescence on the camera 66. From these one or more images a program run on a classical computer system may be used to determine the position of the initially occupied sites 58. Additionally, or alternatively a user may provide input to determine such positions. When a classical computer is used, an algorithm is used to determine a set of moves, for the tweezers, to rearrange the initial configuration to the desired predetermined configuration. The algorithm may be run on a GPU to affect real time processing. A Field Programmable Gate Array (FPGA) may be used to transfer the data in this operation. The data that corresponds to the required 'moves' is then communicated to the 2D acousto-optic laser beam deflectors 48.

Optionally a further image may be acquired in a similar way as described above to check whether the sub-register formed has atoms in the predetermined positions. Furthermore, when any quantum processing is complete, the sub-register may be read out in a similar way using the camera 66. The above process of setting up a sub register is optional; the use of the atoms in the register may be performed, in principle, without the need for setting up a sub register.

Rydberg entanglement

We now discuss. for neutral atom quantum computers the inter-atom interactions, hence entanglement between the qubits. Neutral atoms in their electronic ground state can only interact significantly via contact physical collisions. Single atoms are typically separated by a few micrometres in the register and therefore do not naturally 'feel' each other, therefore they do not normally interact. EM pulses imparted on the qubits may cause different qubits to interact using Rydberg states, in particular through the Rydberg blockade effect. An atom in a Rydberg state or a 'Rydberg atom' is an excited atom with one or more electrons that have a very high principal quantum number, n, entailing that the electron is far from the nucleus and thus allows that atom to interact with another atom. The laser 12a/b used to impart light at the wavelength needed for the Rydberg transition may be referred to as the Rydberg laser. The Rydberg laser and its output light may be referred to herein as the 'Rydberg channel'.

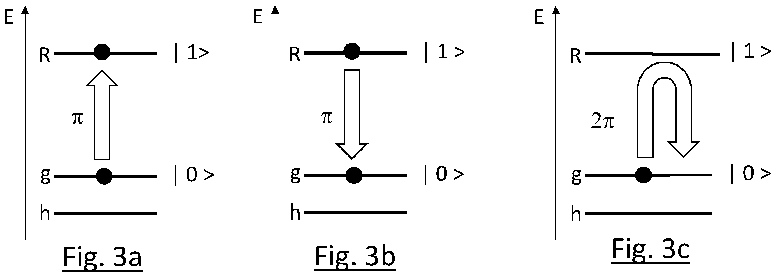

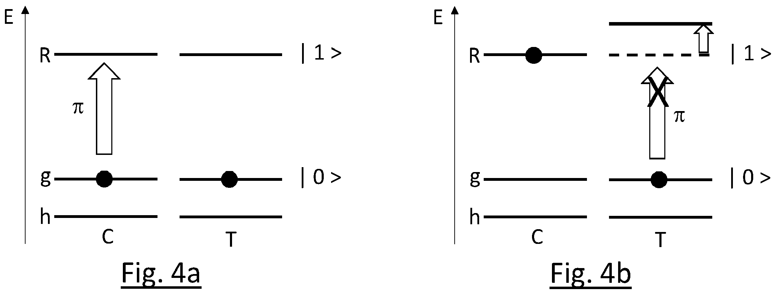

Figures 3a-3c schematically show three levels of the atomic system of the rubidium atoms used herein wherein: the energy levels 'g' and 'h' denote the hyperfine states wherein the state 'g' represent the $|0>$ qubit states respectively, whilst 'R' represents the Rydberg state which is the $|1>$ qubit state of the atomic system. The examples in figures 3a-3c and 4a, 4b are used for illustrative purposes to explain the Rydberg blockading effect using different single pulses to transition the atom from a ground to a Rydberg state, however in an analogue system the EM signal inducing a blockade may be a series of EM pulses and/or a continuous EM signal spanning the duration of the quantum calculation before the qubit measurements are made.

The label of 'π' in figures 3a and 3b is shown when a single transition is made between the $|0>$ and $|1>$ state indicating that a π change in θ (see equation 4) has been imparted into the atomic system because of the overall transition. Similarly, when a laser field of sufficient duration and amplitude has been imparted onto the atom to transition it from the 'g' energy level up to the R energy level and then back to the g energy level (within the same control field input), this is labelled as '2π' indicating that a 2π change in θ (i.e., a full Bloch sphere rotation) has been imparted into the atomic system because of the overall transition. The corresponding change in θ may also be referred to, herein, as a 'phase change' or 'phase factor'. It is understood that the input control fields causing these transitions in figures 3a-c have a wavelength resonant with the $|0>$ to $|1>$ transition. Figure 3a shows the atomic transition from the g level to the R level with a π-pulse. Figure 3b shows the atomic transition from the R level to the g level with a π-pulse. Figure 3c shows the atomic transition from the g level to the R level and back to the g level again with a 2π-pulse.

An example of the Rydberg blockade is the situation where two neighbouring atoms are both in the $|0>$ state, i.e., both at the g energy level as shown in figure 4a. In figure 4a, the above energy levels are shown for two identical rubidium atoms wherein, for this explanation, the first atom is termed the 'control' atom (or control qubit), labelled 'C'; whilst the second atom is termed the target atom (or target qubit) labelled 'T'. The Rydberg blockade may come into effect when one of the atoms, for example the control atom C is transitioned to the R energy level with a π-pulse as shown in figure 4a. At a time after the C atom has transitioned to the R state, the equivalent R state energy level for the T atom is raised above its normal energy level due to the effect of the C atom being in a higher energy state. If a π-pulse is then introduced to the T atom whilst this 'blockade' is in effect, as shown in figure 4b, the π-pulse will not transition the T atom from the g energy level to the R energy level due to the laser wavelength now being detuned from the energy difference between the new Rydberg-energy level and the g-energy level. As such, the T atom remain in the g state. The Rydberg blockade may therefore be used to enable the state of one qubit (C atom) to affect the state of another qubit (T atom). The cross over the arrow in figure 4b, and in other figures, indicates that the transition did not occur.

Rydberg atoms strongly interact in a way that can be mapped into spin Hamiltonians. Depending on the Rydberg states that are involved in the process, the spins experience different types of interactions that translate into different Hamiltonians. It could be, but is not limited to, dipole-dipole or Van der Waals interaction. When the $|0>$ state is one of the ground states of and the $|1>$ is a Rydberg state, this may map to the Ising model which uses discrete variables representing magnetic dipole moments of atomic "spins" that can be in one of two states. The Hamiltonian of an atomic system using ground-Rydberg states for the different spins may be represented by equation 6.

$$\mathcal{H}(t) = \frac{\hbar}{2}\Omega(t)\sum_{j}\sigma_j^x - \hbar\delta(t)\sum_{j}n_j + \sum_{i\neq j}\frac{C_6}{r_{ij}^6}n_i n_j$$

[Equ. 6]

In this equation, the Rydberg state occupancy is: $n_j = (1 + \sigma_j^z)/2$ wherein $\sigma^x$ and $\sigma^z$ are the Pauli matrices of the spin 'j'. The Rabi frequency is $\Omega(t)$ and can be changed by changing the intensity-time profile of the input EM radiation.

The detuning is δ(t) and can be changed by changing the frequency (i.e., wavelength)-time profile of the input EM radiation.

The first two terms are induced by the laser that couples the qubit states and relate to an effective magnetic field, with transverse B component proportional to $\Omega(t)$ and the longitudinal B component proportional to $-\delta(t)$. These two terms describe how individual spins would precess in the presence of an external magnetic field.

The third term in equation 6 relates to the interactions between individual spins. More specifically, it corresponds to an energy penalty that two qubits experience if they are both in the Rydberg states at the same time. The coupling between two spins i and j is of van der Waals type and depends on the inverse of the distance between them $r_{ij}$ to the power of 6, and on a coefficient C6 relative to the Rydberg state.

The system may use other spin states associated with Rydberg states. Instead of using a ground and Rydberg state, the system may use two Rydberg states that are dipole coupled. These states may be $|nS>$ and $|nP>$. Such a system may be described by a different Hamiltonian, namely the XY Hamiltonian represented by Equation 7.

$$\mathcal{H}(t) = \frac{\hbar}{2}\Omega(t)\sum_j \sigma_j^x - \frac{\hbar}{2}\delta(t)\sum_j \sigma_j^z + 2\sum_{i\neq j}\frac{C_3}{r_{ij}^3}\left(\sigma_i^x\sigma_j^x + \sigma_i^y\sigma_j^y\right)$$

[Equ. 7]

The first two terms in equation 7 are typically induced by a microwave field.

The third term in equation 7 corresponds to a coherent exchange between the spin states, transforming the pair state $|01>$ to $|1\,0>$.

Other Hamiltonians may be used such as the XXZ model. Examples of a NAQC using Rydberg atoms in optical offer a favourable quality factor Q ~ $10^2$, given by the ratio of coherent evolution rate over the decoherence rate.

Examples of the method using a NAQC

In this example we assume that a neutral atom quantum computer (NAQC) is being used as described elsewhere herein and that the NAQC is being addressed with EM radiation to drive the ground-Rydberg transitions, thus aligning to the Hamiltonian in Equation 6. It is envisaged that other quantum systems such as any of those described herein may be used instead of the NAQC described underneath. Furthermore, any features of this example may be adapted or removed. Furthermore, features from other examples herein may be added to this example. These features include any one or more of, but are not limited to: register configurations, graph types, problem types; EM signals for inputting to the AQC.

The method is used to determine which EM-time profile (and possibly other input parameters to the analogue quantum system) to use for the quantum system to be able to simulate the problem to the extent that the AQC outputs a meaningful result when its qubits are measured.

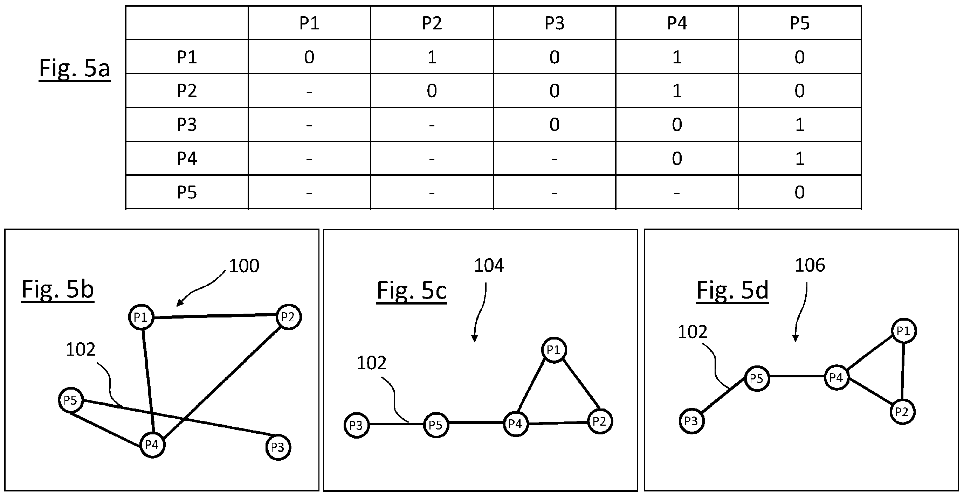

The description of this example starts with a discussion of the problem that needs to be solved. Problems such as Max-Cut and MIS may be applied to an instance of players and connections represented by nodes and edges. Such nodes and edges may be represented by a matrix. Figure 5a shows a simple example of a matrix involving five players P1-P5 (hence five nodes) and non-directional edges connecting some of the nodes. The rows and columns of the matrix represent the nodes whilst the elements in the matrix represent connections. In figure 5a the connections are binary in nature, i.e., they exist with a '1' or do not exist with a '0'. In other similar examples of the matrix a 0 can be put on the main diagonal of the matrix to show that there are no self-loop edges; otherwise you could put 1 to show that there is an edge connecting, say, node 2 to itself, which may be required for some problems.

In other examples, these connections may be non-binary or weighted and may have more than one value depending on the directionality of the connection. In figure 5a, only one of the diagonal half-sections needs to be populated due to the binary non-directional nature of the example, which is the top right section of the matrix in figure 5a.

Figures 5b, 5c and 5d shows alternative pictorial representations of this graph matrix of figure 5a. Figure 5b shows one example 100 with the nodes P3-P5 connected by the edges 102 in the matrix of figure 5a. Figure 5c shows another example 104 with the nodes P3-P5 connected by the edges 102 in the matrix of figure 5a. Figure 5d shows another example 106 with the nodes P3-P5 connected by the edges 102 in the matrix of figure 5a. The nodes may therefore be envisaged in different spatial configurations, therefore when representing the nodes by qubits (neutral atoms in the AQC), the atoms may take different spatial configurations to try and solve the problem.

The AQC can be set up and run so that the physics of the analogue quantum computation fits the graph and the problem to be solved. An AQC such as a NAQC may be used to encode problems such as, but not limited to, combinatorial problems, NP-complete problems due to the ability to deterministically and controllably position the neutral atoms relative to each other and coherently manipulate the internal states of these atoms using EM signals. For this example, we assume the problem to be a unit disk (UD)-MIS problem, however other graph problems may equally be used. The spatial configurations 104 and 106 of the nodes in figures 5c and 5d may, for example, be a more promising 2D configuration for the qubits if edge connections are to be dictated by atom-atom distance, for example with the unit-disk (UD) MIS graph problem. This determination may be made by an algorithm running on a classical computer (see later examples) or manually by a user.

Using the NAQC in analogue mode, multiple atoms are set up to form a register. Typically, the quantum system would use one atom for each node however, in some circumstances more or less atoms, than the number of nodes, may be used. The ability of an atom in the register to act as node that can connect to (hence influences) another node is set by the physics of the AQC, which in the case of a NAQC is the Rydberg states.

Assuming a homogenous driving EM field affecting all register atoms, when an atom is in a Rydberg state its blockade radius (assuming a r^6 interaction) may be given by equation 8:

$$r_B = \left( \frac{C}{\sqrt{(2\Omega)^2 + \delta^2}} \right)^{1/6}$$

[Equ. 8]

Thus, as described above with respect to figures 4a/4b, if two neighbouring atoms in the register are within the Rydberg blockade radius $r_B$ then the Rydberg Blockage effectively prevents the two atoms being in the Rydberg | 1 > state simultaneously. For atoms closer than $r_B$ it is energetically favourable for one of them to stay in the ground state | 0 >.

Thus, the atom positions and the energy states of the atoms directly influence the connectivity of the nodes. Because of this, at least the following two factors in the NQAC influence the solution found by measuring the qubits after the input EM signals have been imparted to the register:

A) The relative positions of the register atoms;
B) The characteristics of the driving EM signal or signals applied to the register atoms (prior to qubit measurement), in particular the Rabi frequency ($\Omega$) and the detuning ($\delta$).

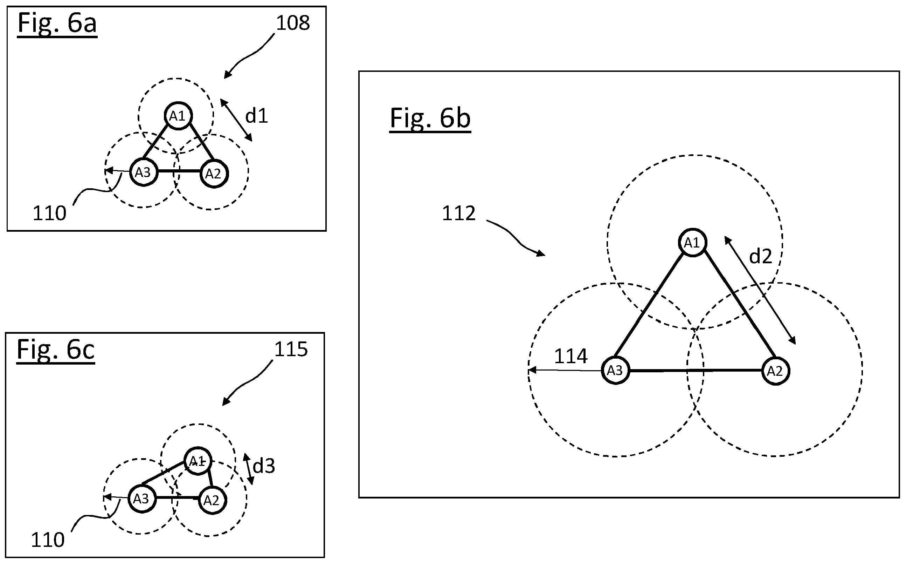

The Rabi frequency may be controlled by the amplitude-time profile of the driving EM signal, which in turn dictates the oscillation frequency of an atom between its two states, ground and Rydberg. The detuning factor dictates how much energy is given to the system per photon. Both Rabi frequency and detuning dictate the maximum radius of the Rydberg blockade. Therefore, it can be seen that factors A and B, above are linked when it comes to encoding the problem in the quantum system. For example, a 3-node problem may be encoded with three atoms A1-A3 in the register in different ways. In figure 6a, the problem is encoded with atoms A1-A3 in a close together configuration 108 with interatomic spacing d1 but with a small blockade radius 110, possibly by having the EM signal driven off-resonance with the ground to Rydberg transition. Whereas in figure 6b the problem is equivalently encoded with atoms A1-A3 further apart in configuration 112 with larger interatomic spacing d2 but with a larger blockade radius 114, possibly by having the EM signal driven at resonance with the ground to Rydberg transition. Figure 6c shows a further example 115 that is similar to figure 6a wherein the atoms A1 and A2 representing the same graph are separated by distance d3.

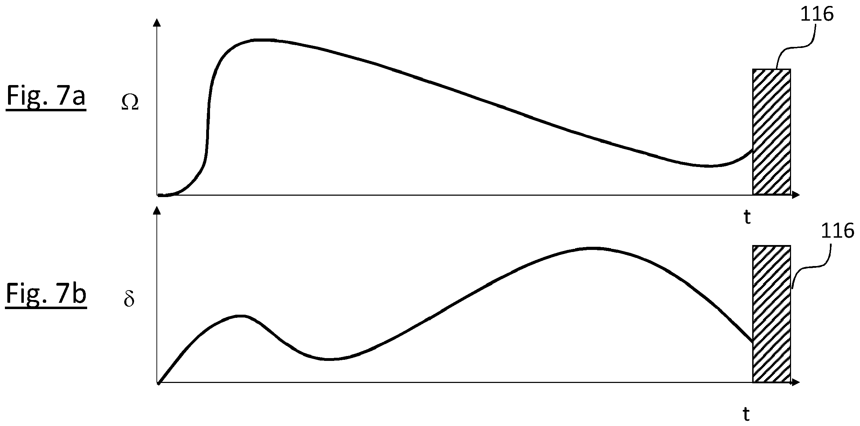

Between the start of the EM signal/s driving the register and the time at which the qubits are measured, all of the atoms in the register may be subject to one or more EM inputs. As stated above, this may be a single EM input signal affecting, hence incident upon, all the atoms in the register. The EM-time profiles of the EM radiation input onto the atomic register may be any shape, for example those time-profiles exemplified in figures 7a and 7b. Figure 7a shows the Rabi frequency with respect to time before the qubit measurement period 116. Figure 7b shows the detuning with respect to time before the qubit measurement period 116. The measurement 116 of the atoms at the end indicates which atoms (hence qubits representing graph vertices) are in the solution, for example which vertices (nodes) are in the max-cut group.

Multiple different EM profiles may be used with multiple different register atom configurations to try and encode the problem. For a given set of atom positions, different EM profiles may be run on the quantum system and the qubits measured. The qubit results may then be post-processed, using a classical computer, to see which of the EM profiles yields with the highest probability the solution to the problem. This post processing is typically achieved by translating the most probable quantum final state into a solution to the problem: for each excited atom, the related graph node is activated and said to be in the final solution. Hence, all activated nodes form an independent set (resp. cutting set) to the MIS (resp. Max-Cut) problem on the given instance.

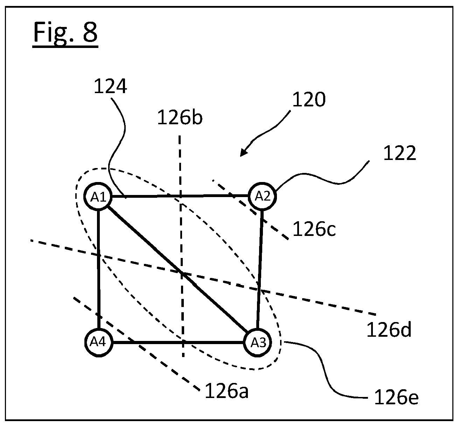

For example, take the graph 120 in figure 8 having four nodes 122. The nodes are represented by register atoms in a 2D plane, labelled A1-A4. Fives edges 124 connect the nodes. If this graph 120 were to be subject to a Max-Cut problem, then: cut 126a goes through two edges; cut 126b goes through three edges; cut 126c goes through two edges; cut 126d goes through three edges; cut 126e goes through four edges. The Max-cut solution is therefore cut 126e. This may be evaluated using standard classical graph solving software systems. Thus: an EM profile that results in a measurement yielding only A4 as the excited qubit may be seen to have encoded the problem with the cut 126a; an EM profile that results in a measurement yielding only A4 and A1 as the excited qubits may be seen to have encoded the problem with the cut 126b; an EM profile that results in a measurement yielding only A2 as the excited qubit may be seen to have encoded the problem with the cut 126c; an EM profile that results in a measurement yielding only A1 and A2 as the excited qubits may be seen to have encoded the problem with the cut 126d; an EM profile that results in a measurement yielding only A1 and A3 as the excited qubits may be seen to have encoded the problem with the cut 126e. Post processing of the results obtained from the five different EM profiles may show that the EM profile giving rise to cut 126e is the optimum EM profile. Note that cut 126e is not the only optimum cut: a similar cut circling A2-A4 as a cut-set also gives a 4-edge cut. This result may then be used as training data insofar that the characteristics of the EM profile yield, hence optimally encode, the solution. Assuming the positions of the atoms A1-A4 in figure 8 represent the actual atom positions in the quantum system; if the register-atom positions representing the graph of figure 8 are then changed, then the EM profile yielding the Max-Cut will likely also change; for example, if the atom A1 moves to the left slightly. Different atom positions may need to be explored with different EM profiles to establish a Max-Cut solution. For example, if none of the EM profiles input for one register configuration lead to the max-cut solution 126e, then other register configurations may also be tested to see if any EM profiles lead to the max-cut 126e. The above example of Figure 8 is simple and, in practice relatively few quantum runs (i.e. a particular atomic configuration input with a particular EM profile) may be required. However, for larger problems with many more nodes, the above method of running multiple instances may become too time consuming. As such the method presented herein, in some examples, may utilise an AI system, such as supervised learning, to speed up the process of determining what register configuration and corresponding EM profile successfully encodes the solution to the problem.

Referring to the example of figure 8, the max-cut EM-profile of the four-node, five-edge graph, with one register configuration, may be used as training data for training a model that can then be used to provide an EM profile for encoding an atom register for solving any of, but not limited to: the same problem but with a different register configuration; a different problem for the same or different register configuration.

In the above example of figure 8 we have assumed that one of the five EM profiles used on the quantum system returned an optimised EM profile that successfully encoded the Max-Cut solution for this problem. This may not always be the case because before any EM profiles and register configurations are run, we do not know which EM profile and corresponding atom configuration will give the correct encoded solution. There may be situations where a selection of EM profiles, for a particular register configuration, are run on the quantum computer and the results are used to train a machine leaning model such as a supervised learning model. The number of 'runs' attempting to successfully encode the problem of the quantum system may vary and may be any of, but not limited to:

A) multiple runs just for a single register configuration. In other words: a plurality of different EM profiles are provided to the quantum system; each EM profile constituting a 'run'; the qubit measurement of each run is post processed to determine the size of the cut given by the final solution and which nodes of the graph are on each portion of the 'cut'; the data is used as training data for creating a model, for example a supervised learning model for the max-cut problem . The model may then be used to output an EM profile that the model believes optimally encodes the max-cut for other unseen graphs. Each EM profile may be used to sample/measure the final state several times. So each run may be part of a "batch" of runs associated with each EM profile.

B) Multiple runs for multiple register configurations. The same process for A) above applies but several EM profiles are run for each of a plurality of register configurations. The register configurations may vary in atom number and/or relative position. All of the data from the runs may then be used, as training data, to create a model for estimating an EM profile and register configuration that aims to provide an optimum solution to the max cut problem for arbitrary, potentially unseen graphs with a number of nodes that may or may not match the number of nodes of the graphs used to train the model.

The above considerations are equally applicable to other graphs and problems. The runs preferably, but not always, represent a heterogeneous sampling of EM profiles for a particular register configuration, and optionally a heterogeneous sample of register configurations.

The training data set may be used to teach the model to predict good pulse for any graph-register instance. In other words, the method may train the ML with the goal of finding some rules that, if applied to any situation, will give a good solution. The term 'rules' may be any rules for example of the sort of formula like y = 5x. The rule therefore may be an equation. Thus in this rule example, if you change 'x', you get a different y, but the rule remains the same: y = 5x. The ML model may find that rule for you, instead of trying every single one for each new unseen graph-register.

The method may therefore provide a more efficient way of finding an optimally encoded solution to a graph problem by using a relatively small number of training data subsets (each data subset associated with a different EM-profile), for a particular register configuration, to train a model that can then output an optimally encoded EM profile, rather than run a very large number of EM profiles on the same register configuration to find the optimally encoded solution (which may take a large amount of time).

The above examples describe aspects of a supervised learning regime. In some examples, and as previously discussed, the method may also use reinforcement learning wherein an initial set of EM pulse parameters and/or an associated EM profile is provided, generated or obtained. This may be for example a random EM profile such as a guess. The 'guess' EM profile corresponds to a 'guess' set of EM pulses parameters for the EM pulse input to the register. After guessing the pulse parameters for a chosen instance of the graph problem, the EM pulse is then provided to the register and the qubits measured. The quality of the resulting solution may then be calculated in functions of the predicted parameters and a score function. These are fed back to the learning method to update one or more rules, following which a further different EM profile is generated (typically using the updated rule/s) that is input to the quantum system. This may repeat iteratively. A stopping criterion is typically used to stop the reinforcement learning going through its iterative process. As described above, if the stopping criterion (e.g., training convergence or number of iterations) is not yet reached, the ML model is updated with the penalty/award calculated according to the quality of the current solution, and, if there is no need to generate new training instances, a new 'guessing' round is then done.

The method may be applicable to any size of graph, however the advantage of the method presented herein becomes even more apparent when the graph problem, for example a Max-Cut enlarges to many nodes and edges, for example a graph with 1000 nodes and 1000000 edges. In such an extreme example the solution may be extremely time consuming to calculate using traditional classical graph computation techniques (not using a quantum system). It would also be extremely time consuming to try and manually find the correct register configuration and EM profile to encode the solution on the quantum system. However, in such a situation the method presented herein may cut this time significantly by only running the quantum computer for a select number of EM-profile runs for a select number of register configurations. The AI model developed from using this training data learns patterns from the training data and therefore is in a position to output an EM profile for a given register that optimally encodes the solution to a degree of confidence.

In any of the examples above, a model created for one or more register configurations, or indeed problem types may be used to help train or develop a model for another register configuration or problem type. The models may be the same or a different type of model. For example, for the max-cut problem in figure 8, if a supervised learning model was created that output parameters for optimum encoding the problem in figure 8, then the same model may be used to help train a supervised learning model for a similar graph with one edge removed, alternatively it could be used to output initial parameters (register atom configuration and EM profile) for running the problem on the quantum system wherein the output result is used in a reinforcement learning model. Thus, in this latter example the supervised learning model, once trained, is used to output a promising starting point for a reinforced learning model trying to model a similar but slightly different graph problem.

Optionally, and in general, when deciding which register positions and EM profiles to run on the quantum computing system, the following may be used to determine the input parameters for the 'run'.

    1) The number of register atoms used.
    2) Quantum system component and device and constraints.
    3) EM radiation constraints. This may include any of, but not limited to: the number of EM sources and their maximum/minimum wavelength; their maximum/minimum output powers.
    4) The register configuration, i.e., relative atom positions in the register.

Selecting an AI method

The method may also determine which AI learning method to build the model. This determination may be made using different factors, such as but not limited to; any one or more of: the number of graph vertices; the number of edges; the relationship between the edges and vertices; availability of other models either trained or part-trained; availability of pre-existing training data; any of the physical operating characteristics used to run the analogue quantum computer, such as number of atoms available to trap in the register, number of EM sources and any time periods for operating any aspect of the AQC. For example, if the set-up time for the AQC is long and existing input parameters exist for successfully encoding a very similar problem, then the method may determine that a reinforced learning method may be most appropriate. This determination may be made by determining the time taken for running a desired number of sample-runs and comparing it to another value such as a threshold.

If you have or can generate a very good (representative/heterogeneous) data set for your problem (for example because you did it using 'classic' quantum approach; e.g., hybrid classic-quantum approach), using SL may be the optimal choice, because you have already solved a lot of problems and hence have a very good pulse for each of those instances. Then, you use that information to teach your model. It will find the rule 'register->pulse' by just looking at your data. If your data is good/representative enough, you'll have a good SL model.

However, if you don't have such historical data or can't generate any, you may, for example, alternatively use the reinforcement learning approach, which may not need any solved training data set (only a set of graphs to try, but no EM profile). The RL however may have a very slow learning process, because it's the model that will determine out what is a good pulse for each instance and then try to learn how to create a rule register->pulse that fits any graph-register. In other words, on one hand you have the SL that learns very fast, but needs to see what is a good pulse for each training instance, and on the other hand you have the RL, which is polyvalent, but slow.

Examples of how the model may be trained

Types of AI or Machine learning models are listed elsewhere herein but may include a Multi-target Regression (MTR).

The model may be trained in various different ways including the training data used and the rules for how the model learns. For example, different models may be generated for the same or similar training data set by using different rules or techniques for learning. The rules for learning may be associated with using different estimator methods such as but not limited to: a gradient boosting regressor; a linear or logistic regression; a ridge regression. These may be suitable for supervised leaning. For RL, the method may use a neural network with different types of layers: convolutional, dense, activation layers, etc. A model that has learnt from the training data in a different way may be better at providing solutions to different input queries.

Different training data may be fed-back to develop the model. Such data may include, but is not limited to:

a) only training data sets which are correct or have a high probability of being a solution to the problem (for example only the input features, such as EM profile for a given atom configuration that gave a valid max-cut solution of 5 edges).

b) training data sets which include examples where input features were encoded into the quantum system to produce a sub optimal solution (for example, other EM profiles to the one referenced in a) above that gave non-max cut solutions.

For example, take a supervised learning model with a max-cut graph problem with a fixed number of nodes and edges, as well as which nodes the edges are connecting. In other words, the size and order of the graph remain the same as well as the problem to be solved: max cut. The quantum system can simulate this problem by the following feature variables: varying the number of atoms, the relative position of the atoms, and the EM pulse shape. For each register configuration (which includes varying in the number of atoms and atom positions) a set of EM pulse shapes (each of which is associated with an EM profile) are run that represent a heterogenous sample of all the types of EM profiles that could be run. Each one of the set is post processed to determine the EM profile that gave the best solution from that set. Similar sets are then run for different register configurations wherein each time, one EM profile is selected from the set to be used as the training target value for that particular set of input features. This choice of training data is akin to option a) immediately above. The model is then trained on this training data and then can be used to output an EM profile for new, unseen register-atom configurations. Because the model has learned patterns in the training data set it can not only output an optimal EM profile to solve the max-cut problem for the data it was trained on, but also for register-atom configurations it was not trained on.

In another example, similar to the example immediately above, the model may be generated to be used (once trained) to output a likelihood of optimal solution given a type of EM profile and a register as an input query. Such a model would be generated with the data sets given in b) above wherein the model is able to learn not only which EM profile provide the best solutions but also how close to the optimum solutions other EM profiles are.

EM profiles

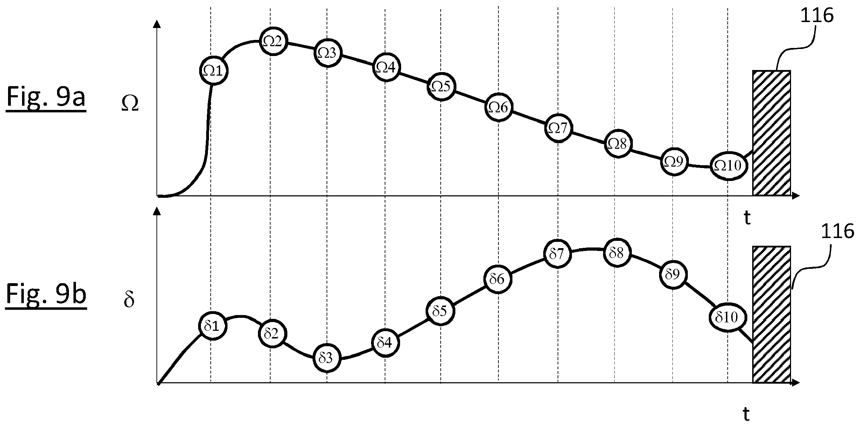

The EM profiles may be characterised by dividing the waveform, be it either the detuning time-profile or Rabi-frequency time-profile, into data sections. Data sections may represent different points or areas of the time profile. Thus, for example, for a given overall time duration the EM profile may be characterised by ten points (or any number or points) in both the Rabi frequency time profile and the detuning time profile. Figures 9a and 9b show the EM profiles of figures 7a and 7b, each represented at ten sampling points, respectively $\Omega1$-10 and $\delta1$-10. Each point representing the value of the Rabi frequency or detuning at that particular time. The points may be equally spaced in time or unequally spaced. As an alternative the data sections may be gradients of the detuning or Rabi frequency between two points. Rabi frequency and detuning values may be measured or expressed in rad/$\mu$s.

The EM profiles output from the model or used to generate the training data may be of any configuration including, but not limited to, square-wave-like, linear between consecutive data points along the time-profile, a curve that best fits data points along the time-profile.

Max-Cut Example

The following example describes one example of implementing the method and system presented herein. It starts by illustrating how a problem may be solved in the prior art and then goes into how the problem is addressed by the method and system presented herein. The example is not necessarily limited to the features used and may be adapted according to any other teaching herein including, but not limited to any one or more of: the type of quantum computer used; the size and order of graph; the graph problem being solved; the EM profile characteristics. Any of the steps in the methods described below may be adapted or removed, for example, the requirement to use an algorithm to determine an initial register for the graph. Furthermore, any features of this example, in particular, but not limited to, those listed immediately above, may be used in other examples presented herein.

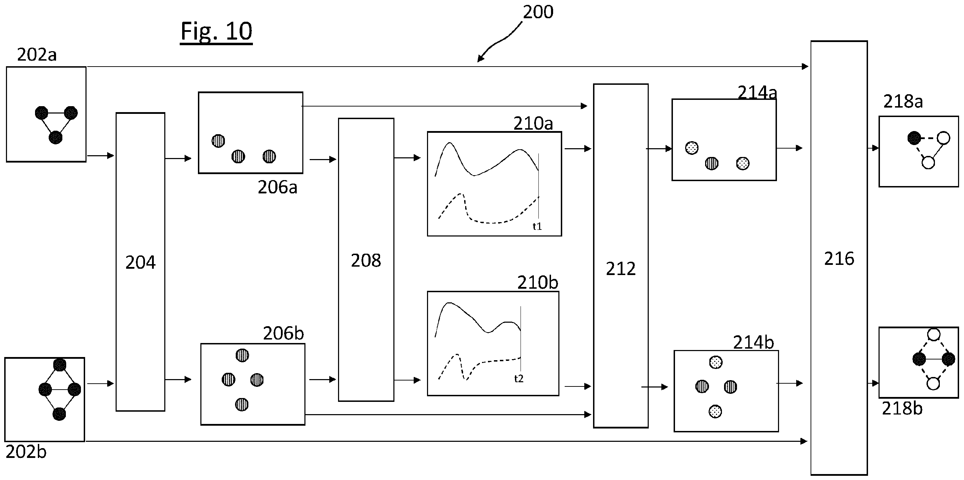

Figure 10 shows a method 200 of solving a max-cut graph problem using a quantum computer but without using an AI solution described above. The Max-cut problem is required to be solved for two graphs, 202a and 202b. Graph 202a has three nodes represented by black circles and three edges connecting the three nodes. Graph 202b has four nodes represented by black circles and five edges connecting the four nodes wherein the only two nodes that are not directly connected to other nodes via a single edge are the top and bottom nodes. The features of these graphs are then input into an algorithm 204 that creates an atom register for a NAQC. The algorithm 204 outputs, for each graph input query, an output register 206a, 206b design with the number of atoms and relative positions. The number of atoms in the register and their relative position in real space to each other may be referred to as a 'register configuration' or 'atom-configuration' or 'register atom configuration'.

At step 208, the data defining the register design is then used to determine what EM profile to input to the register to properly encode the problem such that the NAQC outputs the optimal solution when measured. This is either done a) using a simulation of the quantum system on a classical computer; or, b) running a very large number of real simulations on the NAQC and evaluating the results to determine whether the measured qubits, on each run of the quantum system, yield one or solutions (or near optimal solutions, for example within a tolerance of an optimal solution) that, together, explore all the possible EM-profiles. Outputs from step 208 in the example shown in figure 10 are: the EM profile 210a for the graph 202a and the EM profile 210b for the graph 202b. The solid curved line in inset 210a represents Rabi frequency, $\Omega$ ,over time, from the start of the EM pulse upto the qubit measurement point 't1'. The dashed lines in inset 210a represent detuning, $\delta$, over time upto the measurement point 't1'. The solid line in inset 210b represents Rabi frequency, $\Omega$ ,over time, from the start of the EM pulse upto the qubit measurement point 't2'. The dashed lines in inset 210b represents detuning, $\delta$, over time, from the start of the EM pulse upto the qubit measurement point 't2'. Times t1 and t2 denote the total time of that the respective EM profile is incident on the register, assuming the EM profile starts at time t=0 in each case. Different EM pulses for different problems or different instances of the same problem, may have the same or different durations. In this example the EM profile is incident upon all the atoms in the register, although atoms may be separately addressed in other examples.

In the case where the EM profiles are determined using a classical computational simulation, the EM profiles are then input into the NAQC 212, as an EM pulse output from one or more EM sources, which yields atoms in the register, via measurement at times t1, t2 (respectively for graphs 202a and 202b) that are either fluorescing or not. In some quantum computing systems, at the end of the pulse, all atoms are fluorescing and, physically, only atoms measured in |ground> are "recaptured" (and yield a fluorescence signal), the optical traps where the atoms were measured in |Rydberg> are simply empty (and thus yield no signal). In figure 10, the final state of the register 214a for graph 202a shows two dotted circles indicating excited atoms and one circle with vertical lines which is not excited. Similarly, the final state of the register 214b for graph 202b shows two dotted circles indicating excited atoms and two circles with vertical lines which are not excited.

The excited atom data is then input into a further algorithm 216, together with the associated original graph data 202a, 202b. The algorithm 216 translates the final state of the registers into a solution 218a, 218b for the problem on the initial graph 202a, 202b. Inset 218a is a diagrammatical representation of the final Max-Cut solution for graph 202a, where dashed edges are those cut by the related cutting set (composed of white-filled node circles). The solid edge between nodes in the cutting set is not considered (which may be a problem-related constraint). Inset 218b is a diagrammatical representation of the final Max-Cut solution for graph 202b, where dashed edges are those cut by the related cutting set (composed of white-filled nodes circles).

If this process in figure 10 were to then require the max-cut solution of a new graph, for example a graph like 202b but having a further additional edge connecting the top node to the bottom node, the same process followed for solving graphs 202a and 202b would need to be followed again, in full, which may take a long time and be resource intensive. A bottleneck of this approach in figure 10 is the algorithm 208. In general, it simulates (in a classical computer) several EM profiles until finding one that is good enough. Once the max number of iterations is reached, algorithm 208 may stop and gives you the best EM profile found during the process. Only then, you can run algorithm 212 (either on a real machine or with a simulator/emulator on a classical computer). This process (algorithm 208) is time consuming and cannot be done for bigger graphs in a reasonable runtime.

Examples of methods described herein, including those described below, may replace the algorithm 208. Once it the model trained, we don't need to test several EM profiles. Instead, the ML model may predict what is a good pulse, without needing to test it wherein the model's accuracy depends on how well it was trained. This process of outputting the EM profile from the trained model may be done in, for example, 1 ms and doesn't depend on the graph's size/order.

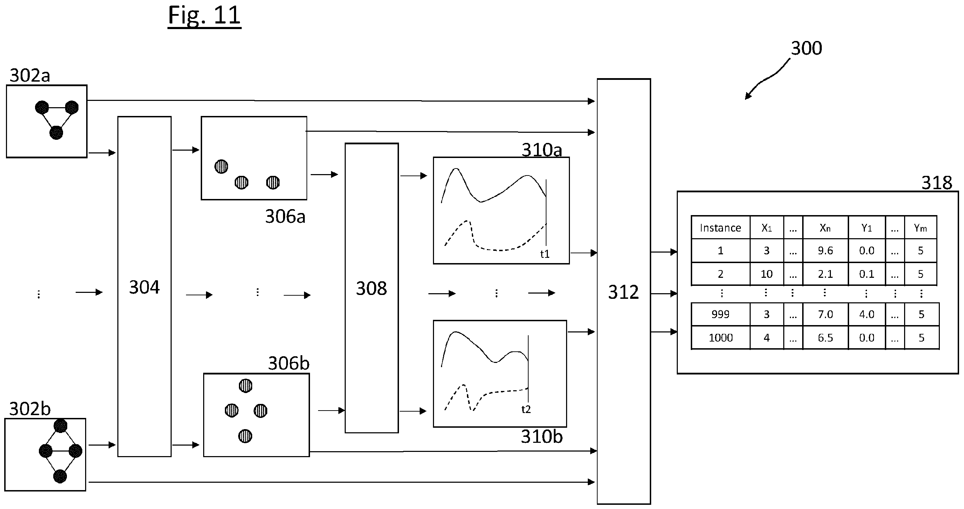

Figure 11 shows one example 300 of the method presented herein wherein graphs 302a and 302b are used as training data for a model for solving a Max-Cut problem for similar graphs.. Thus, the total number of graphs desired to have graph-problem solutions is larger than the number of graphs initially solved in the following training process 300.

Figure 11 shows an example of generating a training data set. Graphs 302a and 302b are similar to the graphs 202a and 202b of figure 10. Figure 11 only shows two graphs input into the training data generation method, however in principle one or more, or a plurality of graphs may be used. Each graph 302a, 302b may be associated with one or more, or a plurality of different register configurations 306a, 306b. Each register configuration 306a, 306b may be associated with one or more EM profiles 310a, 310b. Each EM profile for a particular register for a particular graph and graph problem may be an 'instance'.

Algorithm 304 acts similarly to that described above for algorithm 204 and outputs register configurations 306a and 306b in a similar manner to register configurations 206a and 206b. Step 308 may work similarly to step 208.

In some examples, however, fewer output (optimal) EM profiles may be generated; such circumstances may be where an initial output EM profile 310a is input into the NAQC and a near-optimal solution is found that is good enough for the machine learning algorithm to learn from. Figure 11 shows one example of an EM-time profile, with Rabi frequency as a solid line and detuning as a dotted line, for driving the AQC, however in practice the step 308 may provide a plurality of different EM profiles for inputting to the same register configuration. These profiles 310a, 310b, similar to the outputs of step 208, may have been determined using an optimisation algorithm run on a classical computer wherein, for example, profile 310a has been determined to be the single optimum EM profile for that configuration. In other examples multiple EM profiles are output optionally together with the type of solution they provided. Additionally, or alternatively the step of 308 may involve running multiple different EM profiles on the AQC and the results measured, and post processed to determine whether the solution was optimal. Again, a single profile (for a single register configuration) may be output from this step or multiple profiles for the same atom configuration wherein each profile is associated with a particular result.

The different EM profiles determined at step 308, for example profiles 310a for register configuration 306a, may be any of, but not limited to: a) a large number of EM profiles representing the full spectrum of EM profiles given the constraints of the quantum system and the EM input sources; b) a heterogeneously sampled subset of EM profiles covering the same full range set of possible EM profiles for the register configuration; c) an iterative approach to determining the optimum EM profile for the register configuration wherein, for example, a single starting EM profile is tested and the qubits measured and post-processed to determine if the Max-Cut has been encoded, if it has not then further different EM profiles are run on the quantum system which may be developed using an AI method such as reinforcement learning.

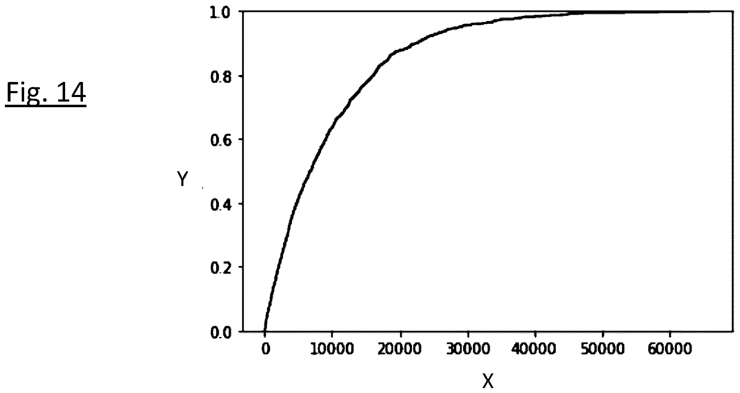

Figure 14 shows a graph showing a relationship between (on the Y-axis) the accuracy to predict new (unseen) instances with increasing number of solved instances in the training data set (on the X-axis). The graph in figure 14 shows that in order to get better accuracy in predicting unknown instances, the number of training examples should be increased but that the relationship is not linear and increases in an asymptotic fashion as the required accuracy goes between 0.8 and 1. There may therefore be an optimum number of training instances for a given accuracy. The preferred number of training instances is preferably any of: equal to or over 10000, equal to or over 20000, equal to or over 30000, equal to or over 40000, equal to or over 50000, equal to or over 60000; or between any two of these aforementioned values. However, in some example, such as if you know that you'll never have to predict pulses for graphs with more than 10 nodes for example, only upto 1000 instances may be needed to be solved to generate the training data set.

For the purpose of the example in figure 11, we assume that a single EM profile is determined for each register configuration 306a, 306b and that only a single register configuration 306a, 306b is determined for a particular graph. The algorithm 304 may output a plurality of different register configurations for a particular graph, for example graph 302a may have multiple register configurations 306a wherein step 308 may output one or more optimal EM profiles for each register configuration, as described above. As discussed above, the particular register configuration 306a of graph 302a illustrated in figure 11 together with the optimal EM profile 310a illustrated in figure 11 may be a 'training instance'. The data of the graph itself is typically part of the (training) instance data because it is desirable to know the original graph that the register represents to know what is a good EM pulse. For example, the register might not respect the blockade radius constraint to represent the original connections in the graph, so, the method may need to know the real edges. The connections (in figure 11) between each graph 302a, 302b and the last algorithm 312 represents data describing the graph being input into the algorithm 312. Such data may also be input into algorithm 308 to be used to generate its output data 310a, 310b.

In this example we assume that each instance is a register configuration and EM profile for a single graph wherein only a single register configuration is output by algorithm 304 for any graph and only a single optimal EM profile is determined by step 308. As described above, steps 304 and 308 may output multiple register configurations and EM profiles respectively. This example assumes that there are 1000 instances, however any number of instances may be generated for the training data set. These example 1000 different instances may vary in any one or more of: graph (i.e., data associated with size and order), register configuration, EM pulse shape. For each instance, we can therefore vary any subset of those entities: for example, only graph, only register and pulse, only graph and pulse, only pulse etc. Preferably there are X different graphs, where X is the optimal size of the training data set (which is much smaller than the whole space of possible graphs).

The instances chosen may be such that any one or more of: a) the graphs 302a, 302b of the instances are a representation, preferably heterogeneous, of the total number of graphs of interest; b) the register configurations 306a, 306b are a representation, preferably heterogeneous, of the total number of register configurations of interest. In other words, the 1000 instances in the example of figure 11 may be a sample of 1000 instances from 1,000,000 possible instances of, for example, different graphs 302a, 302b. Although the 1000 sample instances are not representing every graph of interest, they are selected such that at least one instance of the sample 1000 set is similar to any of the instances, thus the 1000 instances a representative of the total group of 1,000,000 possible instances.

Following the determination by step 308 of an optimal EM profile 310a, 310b for a respective register configuration 306a, 306b, an algorithm 312 is then used to determine a training data set, wherein the original graphs may be part of the data of the training set. This algorithm 312 may take in the EM profile data 310a, 310b and data associated with the respective graph 302a, 302b and atom configuration 306a, 306b and determine the training data set from any one or more of this data, preferably all of this data. Figure 11 shows that, in this example, the algorithm translates input data into a table 318 wherein each instance is associated with a row.

The training data set may take any particular form including, but not limited to: a matrix; a vector; a table; a database; a list. In figure 11 the table 318 comprises a column having an index numbering 1-1000 relating to the different instances. The other column entries for the particular instance-row relates to the data for that instance. In the example shown in figure 11 there are two further categories of columns: X-type columns labelled $X_n$ and Y-type columns labelled $Y_n$. The X-type columns are related to the numerical features of both graph and register of a given instance. These may be known as 'input feature' columns. Examples of data for X-type columns include, but are not limited to: graph order (number of nodes), graph size (number of edges), graph density, minimum/maximum/average neighbourhood size, minimum/maximum/average distance between connected and disjoint nodes in the related register. Y-type columns are related to the numerical features of the (possible optimal) EM-profile shape for the related instance. These may be known as 'target value' columns. Examples of data for Y-type columns include, but are not limited to: Rabi frequency and detuning values at specific points of the EM pulse and its total duration, as exemplified in figures 9a and 9b. The output 318 and any of the other intermediate data used in this process 300 may be stored on a memory device. The algorithms may be formed from a set of electronic processor readable instructions stored on a memory device that may be the same or a different memory to where the algorithm instructions are stored. Other examples of classical computer components for use in implementing this method are discussed elsewhere herein.

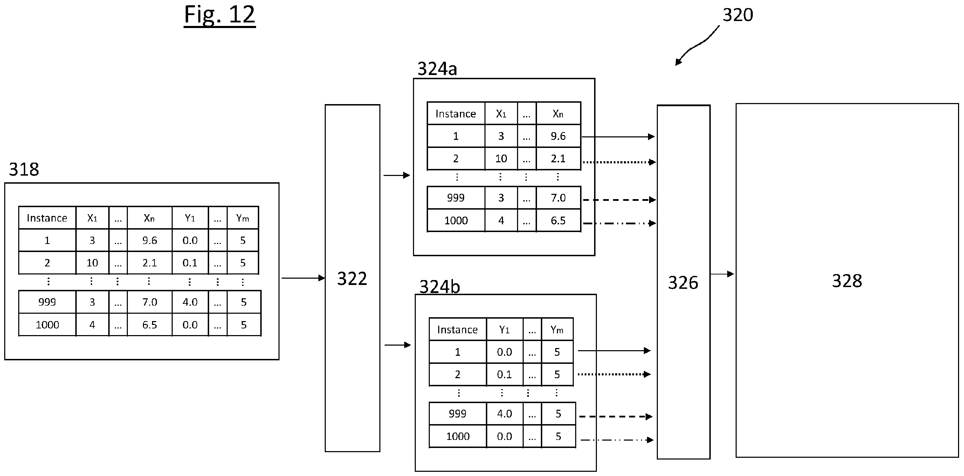

Figure 12 shows an example process 320 of using training data to train a supervised machine learning (ML) model. The example shown in figure 12 and described below may follow from the method shown in figure 11 as described above, or may be independent from it. For the purposes of this discussed we are assuming that the method 320 of figure 12 uses the training data set 318 of figure 318, although any training data set may be used.

An algorithm 322 is used to prepare the training data for the ML model. This may be creating one or more data sets from the training data set. The preparations may include any of: format changes; data clean up, for example rounding of values or deletion of instances; creation of new columns by multiplying, adding, two or more columns. In this example the algorithm outputs a plurality of tables wherein the data in one table is associated with the data in another of the tables. Other output formats are also possible including any similar output types as described above for the training data table 318. The plurality of tables of the example in figure 12 includes an inputs table 324a and an outputs table 324b. The inputs table 324a comprises data related to the input features of training data set 318. The outputs table 324b comprises data related to the target values features of training data set 318. The algorithm may determine which values of the training data 318 go into which of the tables 324a, 324b using any sort of analysis including having predetermined columns to extract or methods to identify the correct rows/columns.

The inputs and outputs tables 324a/b are then input into the ML model. The ML method typically comprises a model algorithm type (or 'approach') and an estimator method. Any ML model and estimator method may be used, however in this example the ML model uses a Multi-Target Regression (MTR) with a Logistic Regressor estimator method. The MTR method may be used to predict multiple target values that are dependent upon the input and each other.

This example in figure 12 represents an approach using a trained SL model. If you want to use a reinforcement leaning approach, table 324b may not be required. Indeed, you don't even have to generate this part of the data and hence can skip the algorithm 308 (fig 11). In one example of using RL, an algorithm similar to 308 will be integrated to 326 (of fig 12).

In figure 12, different arrow types (i.e., different dashed/dotted/solid lines) represent different instances. Each instance may be input into the model at the same or different times, thus each instance may be an iteration of the model's learning process. As discussed, the model may learn from an iterative process and in this example, on each iteration, the model tries to apply the current regression rule on a given instance from table 324a in order to predict the associated values in the related instance from table 324b. After each iteration, the model may check the quality of the prediction. The model training process 326 then updates the regression rule in order to maximize the accuracy on future iterations (predictions). This 'loop' may be done several times until a 'Stopping Criterion' is reached. The stopping criterion may be any criterion including, but not limited to any one or more of: number of instances seen by the model; minimum accuracy; time duration; max number of epochs (which can also be seen as an iteration of the learning process wherein during each epoch, the model sees X different instances at the same time, where X is determined by the user).

After the model has finished its iterative process 326, the method may then output a trained model 328. In this example the trained model has a function similar to the form shown in equation 9.

$$f(n): x^n = (x_1^n, \ldots \ldots, x_i^n) \rightarrow y^n = \left(y_1^n, \ldots \ldots \ldots, y_j^n\right)$$

[Equ. 9]

Thus, for a given instance n and its input feature vector x, the model can apply the final regression rule f(n) to predict the EM pulse shape represented by the vector y.

The trained model may then be used for a variety of different purposes including, but not limited to any of the following.

a) The model may be used to output an EM profile for a particular register configuration for a particular graph and graph problem. Thus, in this use-example the model is provided with any one or more of, but not limited to: graph problem type (e.g. MIS, Max-Cut); graph (including any of size, order and edge connections, edge weights, edge directionality) register atom configuration data. The model may use this input data and correspondingly output one or more EM profiles suitable for encoding the solution on the register configuration.

b) The model may be used to receive an input of: an EM profile; a register atom configuration, a graph the register is representing; and a graph problem, and output a value associated with the expected output of that EM profile when it is run on the quantum computer.

The trained model 328 and any of the other intermediate data used in this process 320 may be stored on a memory device. Any algorithms may be a set of electronic processor readable instructions stored on a memory device that may be the same or a different memory to where the model instructions are stored. Other examples of classical computer components for use in implementing this method 320 are discussed elsewhere herein.

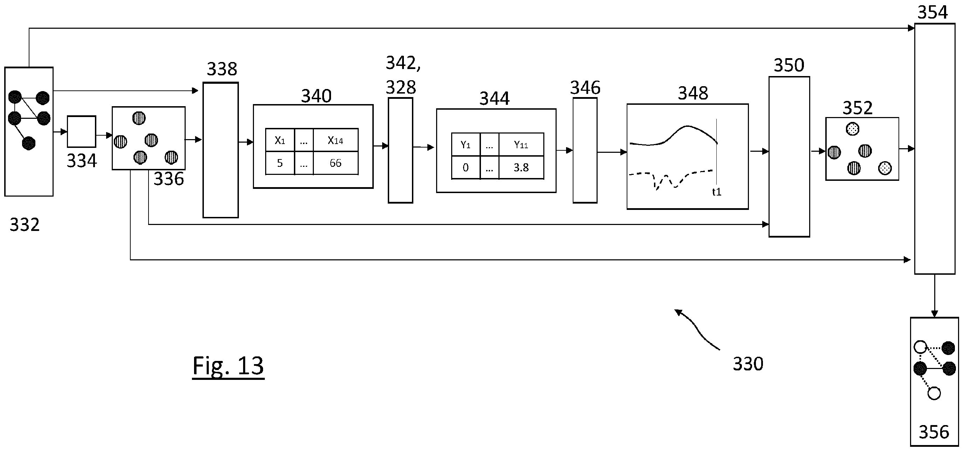

Figure 13 shows an example process 330 of using a trained model, such as the model 328 trained according to the example above and figure 12. In this scenario a user or a computer requires that a graph 332 with five nodes and five edges be solved for a Max-Cut problem. The diagrammatic representation of the graph is shown in figure 13 wherein nodes are represented by black circles and edges are represented by lines connecting the nodes. The graph 332, in this example, is one that has not been previously part of the training data used to train the trained model 328.

An algorithm 334 is used to determine, using data associated with the graph, and optionally the problem, the atom configuration in the register. Algorithm 334 might potentially be designed to create registers for a specific problem (e.g., max-cut, mis). The algorithm 334 outputs a register configuration 336 given the above input data. Data associated with the atom configuration 336 in the register is input into a further algorithm 338, optionally together with data associated with the initial graph 332. Algorithm 338 outputs the data into a form, for example a table, matrix, vector, or other format similar to that disclosed elsewhere, readable by the trained model 342. The algorithm 338 may therefore translate all the graph/register features into an input readable by the model 342. In figure 13, this data set 340 is a vector 'X' of data values. An example of vector X is shown below:

$$X = [5, 1, 1, 5, 0.5, 2, 3, 1, 20, 35, 4, 57, 102, 66]$$

The data values within the vector X are, in order, representing the following information:

i) number of nodes; ([5] representing the five nodes of graph 332)
ii) is the graph connected?; ([1] representing a 'yes')

iii) is the graph a unit-disk?; ([1] representing a 'yes')
iv) the number of edges; ([5] representing the five edges of graph 332)
v) graph density; value being [0.5]
vi) mean/max/min size neighbourhood; values being [2, 3, 1]
vii) mean/max/min distance between connected atoms (nodes); values being [20, 35, 4]
viii) mean/max/min distance between disjoint atoms (nodes); values being [57, 102, 66]

As mentioned above, in this example the trained model 342 is the same as the trained model 328 from figure 12. Trained model 342 then, given the above vector X, outputs target data vector 344 for use with the quantum system 350.
In this example, the target vector is a vector 'Y' containing data associated with the EM profile to encode the quantum system in order to provide a solution to the initial problem. An example of vector Y may be as follows:

$$Y = [\, 0\, ,\, 6.0,\, 13.2,\, 5.7,\, 0\, ,\, -87.6,\, 15.6,\, -66.7\, ,\, 10.9,\, 18.6,\, 3.8]$$

The data values within the vector Y are, in order, representing the following information:

i) The Rabi frequency values wherein the model has represented the EM time profile of the rabi-frequency by five Rabi frequency values spaced out sequentially and equally in time; thus: $\Omega 1, \Omega 2, \Omega 3, \Omega 4, \Omega 5$; values being [0 , 6.0, 13.2, 5.7, 0].
ii) The detuning values wherein the model has represented the EM time profile of the detuning by five detuning values spaced out sequentially and equally in time; thus: $\delta 1, \delta 2, \delta 3, \delta 4, \delta 5$; values being [-87.6, 15.6, -66.7 , 10.9, 18.6].
iii) The total duration of the EM profile, which in this case is a continuous EM profile representing a particularly shaped EM pulse; values being [3.8]

A further algorithm 346 is then used to read the output vector 'Y' above and generates data for driving one or more EM sources for controlling register atom-transitions. The EM sources in this example are such as those described above for figure 2b, for controlling register atom-transitions. This task may comprise any one or more of, but not limited to: a) generating a continuous EM pulse shape based on the Y vector data, b) create signals such as electronic signals, using the Y vector data, for driving the EM sources. An electronic controller may be used to receive this output data and control the EM sources. The controller may also be configured to control other aspects of this method 330 as well as aspects of other methods such as the methods 300, 320 of figure 11 and 12.
The EM sources, given the driving signals, output the one or more EM signals to implement the desired EM profile 348. The EM signal will typically vary, in time, with any one or more of: a) wavelength; b) amplitude; c) polarisation, wherein the combined effect these factors represent the EM-profile output by the model 328. The one or more EM signals are incident upon the atoms in the register. Thus, the EM-time profile is effectively input into the AQC 350. It is assumed that data 336 output from algorithm 334 is used to set-up the appropriate atom configuration in the quantum computer, for example as in the NAQC described elsewhere herein.
After the EM signals representing the EM profile 348 are input to the AQC register, the AQC's qubits are then measured. Figure 13 shows at step 352 that two of the atoms (dot-filled circles) are shining, hence not excited. These two atoms represent two nodes in the graph that form the cut-set. A further algorithm 354 then uses data concerning the register, the problem and the initial graph, and analyses this data to determine which nodes the excited atoms represent and the max-cut solution. The algorithm 354 then output the solution 356 of the graph problem. This solution may in any format include any one or more: data matrices, tables, vectors, lists, figures. Inset diagram 356 shows a diagrammatic representation of the solution wherein the initial graph 332 is shown with the two cut-set (excited) atoms being white circles and edges between nodes in the cut-set. In this particular example edges between the nodes in the cut-set are not counted in the cut.
In the above examples in figures 11, 12 and 13, reference is made to an algorithm to perform certain tasks, however it is to be understood that any such task may be performed using more than one algorithm, furthermore the process implemented by the algorithm may additionally or alternatively be implemented by other classical computing components or features or methods as disclosed elsewhere herein, such as firmware. Furthermore, some algorithms may be implemented fully or partially by a user, for example the functionality of algorithm 338 may be implemented by a user creating the table 340.
Any feature, configuration or step in the above example may be used with other examples herein.

Further example

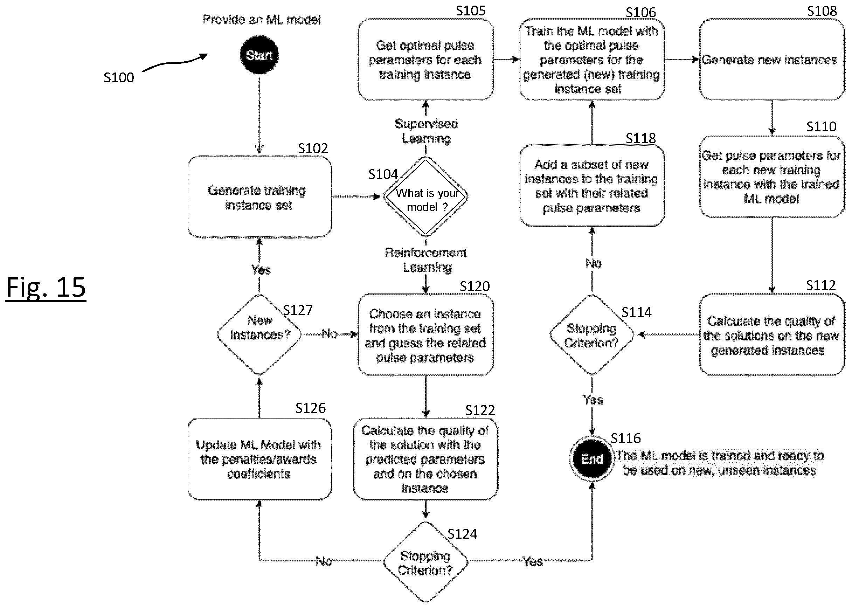

Figure 15 shows an example of a method represented by a flowchart. The Flowchart provides an example of how to train an ML model in order to predict essential parameters in designing complex EM pulse sequence for driving an AQC. The process represented by the flowchart may have a decision point where a different ML method is used. The example in figure 15 uses a choice between supervised learning and reinforcement learning, however choices between any ML learning methods may be chosen as discussed elsewhere herein. The decision to choose one ML learning method over another may dependent upon analysing or comparing one or more factors. These factors may include, but are not limited to:

i) The number of nodes and/or edges expected for any of: one or more of the training instances; the instances not part of the training set;

ii) An estimation of time taken to obtain the training set data.

This process may be used with the example methods discussed above for figures 11 and 12, as well as other examples described herein. This process represented by the flow chart in figure 15 may be adapted to include any features or steps from other examples herein. The process may have steps removed and/or added. Steps may be moved to other positions. Reference to the 'pulse' may refer to the EM signal for input to the AQC that is associated with the EM profiles of rabi frequency and detuning as discussed elsewhere herein.

At step S100 an ML model is provided and the process starts. At step S102 a training instance set is generated. At step S104 a decision is made regarding which learning approach is to be used. The decision may be predetermined by the type of ML model provided at the start. The ML model at the 'start' may be a dummy ML, that was not yet trained, but already knows the rules to learning. In other words, the method may know at this point if it is an SL or an RL model. In an alternative, if you want to check the data before deciding what type of ML model you'll use, the method could start the flowchart at S102, for example wherein S104 made a selection as a result of the output of S102. If a supervised learning approach is chosen, then the process continues to step S105 where optimal EM pulse parameters for each training instance are obtained. After step S104, the process continues to step S106 wherein the ML model is trained with the optimal pulse parameters for the generated (new) training instance set. After step S106, the process continues to step S108 where new instances are generated. After step S108, the process continues to step S110 wherein EM pulse parameters for each new training instance with the trained ML model are obtained. After step S110, the process continues to step S112 wherein the quality of the solutions on the newly instances are calculated. After step S112, the process continues to step S114 the process is assessed with respect to a stopping criterion. If the stopping criterion yields an output to 'stop' then the process continues to step S116 wherein the ML model is trained and ready to be used on new, unseen instances. If the result of step S114 yields a result of 'continue', then the process proceeds to step S118 where a new subset of instances are added to the training set with their related pulse parameters. After step S118, the process continues back to step S106. The loop of S106-S108-S110-S112-S114-S118 may continue until the stopping criteria is met.

Stopping criteria at step S114 may include any one or more of, but not limited to:

i) Comparing the number of trained instances to a threshold. The threshold may be derived from the range of graphs sizes and/or orders that the trained ML model is to be used to calculate solutions for.

ii) Runtime limit.

iii) Quality of the predictions on new instances: (i.e., accuracy)

Coming back to step S104, if reinforcement learning is selected then the process continues to step S120 where an instance is chosen from the training set and a guess is made of the related pulse parameters. After step S120 the process continues to step S122 wherein the quality of the solution with the predicted parameters for the chosen instance is calculated. After step S122 the process continues to step S124 wherein the process is assessed against a stopping criterion. The stopping criteria may be similar to those listed for step S114 or another criteria such as a determination as to whether the instance has encoded (hence optimally) solved the problem to a sufficient extent. This extent may represent the 'quality' in step S124. The determination of sufficient solution quality may be made in any suitable way including any of distance to a known (theorical) upper/lower bound, a predefined target value, or until no further substantial improvement of the value is observed after a given number of guessing iterations.

In one example, the method may not know how accurate the RL model is, because we don't know the optimal pulse. However, the method may simulate the pulse on the register (or run it on a real QPU), see the final state of the system and translate it to a solution on the original graph, after which we qualify the solution obtained (as in 354, fig 13). If the quality is good enough, we can stop. But, a minimum number of instances should be solved before stopping the process, because the model could guess a very good pulse for the first instances by luck. So, besides the runtime, a good stopping criterium may be the quality of the solution of the X last guesses, where X is determined by the user.

If the process is to be stopped at S124, then the process continues to step S116. If the process is determined not to stop at step S124 then the process continues to step S126 wherein the ML model is updated with the penalties/awards coefficients. These may be the coefficients resulting from running the instance on the AQC and post processing the results with an algorithm. After step S126 the process continues to step S127 wherein a decision is made about whether the process includes new instances or not. If the answer to the decision is yes, then the process continues to step S102. If the answer to S127 is 'no' then the process continues to step S120. Thus, the process may form an iterative loop S120-S122-S124-S126-S127-S120. The process may also form a further iterative loop S120-S122-S124-S126-S127-S102-S104-S120.

In this method the loops for doing further training for reinforcement learning and supervise learning may have other break points including a decision point where other ML learning methods are then used. For example, a SL method may be used to generate a first one or plurality of instances, a break criterion is reached where enough SL instances have been developed so that the ML method may output a starting point for the reinforcement learning.

Example of using the method for solving a Max-Cut problem on different graphs

The above process of Figure 15 was applied using a NAQC to solve the Maximum-Cut (Max-cut) problem on different graphs. A formal definition of the studied problem is described underneath. Given a graph G = (V,E), let a cut be a partition of V into two disjoints sets $V^* \subset V$ and V' = V\V$^*$. The related cut-set CS is then a sub-set of edges $E^* \subset E$ connecting $V^*$ to V' and can be defined in equation 10.

$$CS = \{\{V^* \subset V, E^* \subset E \,|\, \forall\,(u,v) \in E^*, (u \in V^*) \oplus (v \in V)\}$$

[Equ. 10]

The Max-Cut can therefore be defined as MaxCut = argmax |E$^*$| wherein E$^* \in$CS.

In the tests a Supervised Learning approach was taken with a Ridge Regression fitting method. A Stopping Criterion was provided of 1 iteration; wherein 1 iteration = 1 epoch with the whole training data set.

The training instance set comprised 4 to 12-node random geometric graphs with average density equals to 50%. New Testing Instance set: 4 to 18-node random (Erdös-Rényi) graphs with average density equals to 50%. The graph features taken into consideration were: nodes positions, numbers of nodes, number of edges, graph density, graph connectivity, distances (maximum, minimum and average) on connected and disjoint nodes. The predicted parameters included: 5 Rabi frequency values, 5 detuning values, and the total duration of the EM pulse. The optimal solution was determined by exactly solving an integer linear programming formulation for the related problem.

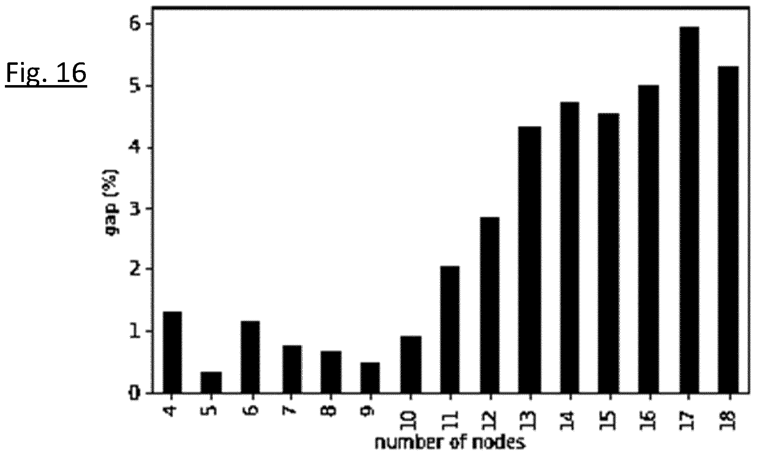

The results of these tests are shown in Figure 16, where the gap (i.e., the distance, in terms of cost, between the optimal solution and the one found by our approach) is smaller than 6% for all graph sizes, even on graphs having more nodes than those ones in the training instance set.

Example using an Ion trap analogue quantum computer

Trapped ions quantum computers are able to implement Ising Hamiltonians with a transverse effective magnetic field driven by EM radiation. A graph with N nodes can be represented with trapped ions by placing N ions in a one-dimensional chain. The model can be trained by applying a plurality of EM profiles controlling the effective magnetic field and the spin coupling to the one-dimensional chain of ions and selecting the EM profiles that give optimal scores for a specific problem instance (e.g., max-clique or matching). The optimal score may be calculated by measuring the excited ions and using the inverse mapping from the one-dimensional chain to the original graph. (Reference https://www.nature.com/articles/nature09071)

The AI approach in this example could be to build an AI model. This model would consist in first extracting characteristics from the graph and then choosing a heuristic function for the pulse out of a plurality of heuristics. For example, given a graph containing 6 nodes, the characteristics could be whether the graph is Unit Disk, whether it contains more than 12 edges and whether all nodes have the same number of edges. In which case the pulse could be either a linear ramp, a constant pulse, a polynomial function, or another defined pulse. The questions asked during the process define a Decision Tree (DT) specifically tailored to the problem to be solved. Different DT may be built by the AI model itself by learning the 'good' questions to ask. The AI model may also generate new approaches to automatically generate pulses in order to solve new problems (e.g. Job-Shop and Bin Packing problems). The new heuristics may be based on different ML approaches (e.g., SL and RL), or meta-heuristics (e.g., genetic and ant colony algorithms).

Example using Reinforcement Learning

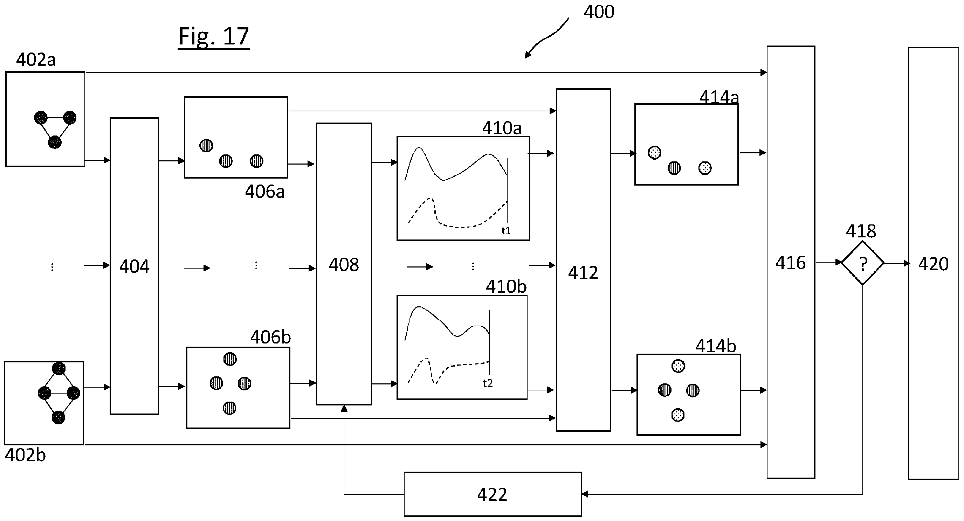

Figure 17 shows a further example 400 of generating a trained machine learning model. In this example the model is trained using reinforcement learning (RL). Some of the elements in this example may perform a similar function to those in other examples, particularly in figure 11. Aspects of this example may be used with other examples herein, for example any or all of the steps shown for figure 17 (or indeed for figure 11) may be used with the example described with respect to figure 15. It should be understood that any of the steps (also referred to as stages) described below for figure 17 may be adapted or removed, furthermore, other steps may be included with the example 400 of figure 17. The arrows in figure 11 indicate data, typically in the form of electronic signals, being passed from one stage to another. The stages (and indeed similar stages in other examples such as in figure 11, 12 and 13) may be at least partially embodied in a hardware and/or software module run on a classical computer. Some stages, such as 412 (and the equivalent stages in other examples such stage 312 in figure 11) may further involve receiving electronic signals to drive an analogue quantum computer.

The example starts with providing one or more training graphs. In figure 17 two training graphs are shown and are labelled 402a and 402b, however the model may be trained using a plurality or two or more training graphs. These training graphs 402a, 402b are similar to graphs 302a, 302b described for figure 11. In principle any number or type of training graph may be used to train the ML model using RL.

The method may select to choose between generating a model using the example shown in figure 11 (which is training a model using different training graphs using a Supervised Learning (SL) approach) or using the RL approach taken underneath with respect to figure 17. In some circumstances both ML approaches may be used to generate two models.

With respect to figure 17, training graph 402a is a graph with 3 nodes (black circles) and 3 edges (black lines). Training graph 402b is a graph with 4 nodes (black circles) and 5 edges (black lines).

Data associated with each training graph 402a, 402b, such as a matrix of data representing the graph, is input into an algorithm 404 that in turn (using this input data) creates an atom register for each graph 402a, 402b. Other data may be input into the algorithm 404 including input data associated with one or types of problems (e.g., maxcut, mis). Algorithm 404 may output data detailing a particular register configuration for a specific problem. The Algorithm 404 may work similarly to algorithm 304 and any features described for algorithm 304 may be used with algorithm 404 and vice-versa.

Figure 17 shows two registers configurations 406a, 406b, each represented by a set of data, one for each of the training graphs 402a, 402b. Training register data 406a describes 3 atoms (stripe-filled circles) and their related positions for graph 402a. Training register data 406b describes 4 atoms (stripe-filled circles) and their related positions for graph 402b.

The data representing training registers 406a and 406b are input into a model being trained by reinforcement learning (RL) 408. The RL model is provided with (or already contains) a rule to generate an EM profile for a given training register. The model 408 generates and outputs an initial EM profile associated with each training register 406a, 406b. The EM profile may be output and described by a set of data. This set of data may include any EM profile data as described herein including a total time-duration. In figure 17, the EM profiles 410a, 410b for respective registers 406a, 406b, each have at least A): profile data representing detuning values; B) and profile data representing rabi frequency values; C) time durations wherein t1 is the total time duration for EM profile 410a and t2 is the total time duration for EM profile 410b. The RL model's rule may change for each iteration of the RL feedback process described underneath. Different models may be trained by RL using different rules. If the RL rules changes at any point then the output EM profile will typically also change.

These initial EM profiles 410a, 410b output by the model 408 are typical 'best first guesses' of a suitable EM profile to either be input into (to drive) an AQC or input into software emulating the AQC. Stage 412 represents the inputting of the EM profile data into the AQC or the AQC emulator.

For this example, it is assumed the data is input into an actual AQC. The AQC (or equivalently the AQC emulator) receives the EM profile data 410a, 410b and other data such as, but not limited to the respective register data 406a, 406b. The AQC 412 is run using this data and outputs final states of each register 414a (for training register 406a) and 414b (for training register 406b). In each output register state 414, 414b, dotted circles represent excited atoms and stripe-filled circles represent non-excited atoms.

The AQC (or equivalently the AQC emulator) runs each EM profile on the respective training register, sequentially. Additionally, or alternatively, there may be a plurality of AQCs (or equivalently a plurality of AQC emulators) for running the said EM profile data on the training registers wherein different runs may be done sequentially or in parallel.

Algorithm 416 receives the data detailing the final register states 414a, 414b and optionally the training graph data 402a, 402b and training register data 406a, 406b. Algorithm 416 then determines, for each training graph 402a, 402b, (using the data received of final state of the register) a solution for the problem on the said graphs. Algorithm 416 also calculates the quality of the solutions for each training graph.

In the process of training the model 408, stage 418 is a decision point wherein a classical computer, or a user, verifies whether any stopping criteria have been reached for training the model, for each respective training graph(s). Stopping criteria may be any of those described elsewhere herein, including but not limited to any of: maximum number of iteration/epochs, minimum overall solution quality, max runtime.

If the stopping criteria have been met for at least one, preferably all, training graphs then the process may determine that the model has been fully trained 420 and may be further used for other graphs. Such usage examples are described elsewhere herein including but not limited to determining EM profile data for other graphs not forming part of the set of training graphs, but for the same graph problem. For example, the trained model 420 may have been trained for a plurality of different training graphs, but each for a MIS problem. Once trained, the trained ML model 420 may be used for determining the EM profile and register configuration for other graphs for the MIS problem. The trained RL model 420 may have a final version of the rule for generating one or more EM profile for a given graph/register.

If the decision point 418 determines that the ML model is not yet fully trained for any particular training graph(s), an algorithm 422 run on a classical computer is then used to adapt the aforesaid RL model rule. The model is then run again, with the adapted rule, to output a further EM profile (not shown) for, in turn, inputting into the AQC. Algorithm 408 may act as an 'agent' (algorithm 422 may be part of the agent) and may use other computer generated or user generated rules to determine what output register state is a good solution or a bad solution and/or how the ML rule should penalise the previous input data giving rise to the previously model-calculated solution. The RL model development process in stage 408 may be run on one or more classical computers and may monitor the learning process. In some examples, algorithm 408 (with or without 422) can be a macro-agent composed of one or more micro-agents, one for each (subset of) target value(s). In case of several agents, the method may call the approach «Multi-Agent Reinforcement Learning». Thus, instead of having only one agent to predict the whole EM profile, a specific micro-agent (within 408), in some examples, may be programmed for each (class of) target value(s): for example: one for all rabi frequencies, one for detuning values, and another one only for the EM duration, for example.

Examples of features of a classical computer/computing system for use with the method

Some portions of the above description present the features of the method/system in terms of algorithms and symbolic representations of operations on information performed by a classical computer. These algorithmic descriptions and representations are the means used by those skilled in the data processing arts to most effectively convey the substance of their work to others skilled in the art. These operations, while described functionally or logically, are understood to be implemented by computer programs. Furthermore, the reference to these arrangements of operations in terms of modules should not be considered to imply a structural limitation and references to functional names is by way of illustration and does not infer a loss of generality.

Unless specifically stated otherwise as apparent from the description above, it is appreciated that throughout the description, discussions utilising terms such as "processing" or "identifying" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the method or system include process steps and instructions described herein in the form of an algorithm. It should be understood that the process steps, instructions, of the said method/system as described and claimed, may be executed by computer hardware operating under program control, and not mental steps performed by a human. Similarly, all of the types of data described and claimed may be stored in a computer readable storage medium operated by a computer system and are not simply disembodied abstract ideas.

The method/system also relates to an apparatus for performing the operations herein. This apparatus may be specially constructed for the required purposes, or it may comprise a general-purpose computer selectively activated or reconfigured by a computer program stored on a computer readable medium that can be executed by the computer. Such a computer program is stored in a computer readable storage medium, such as, but not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

Any controller(s) referred to above may take any suitable form. For instance, the controller(s) may comprise processing circuitry, including the one or more processors, and the memory devices comprising a single memory unit or a plurality of memory units. The memory devices may store computer program instructions that, when loaded into processing circuitry, control the operation of the route provider and/or route requester. The computer program instructions may provide the logic and routines that enable the apparatus to perform the functionality described above. The computer program instructions may arrive at the apparatus via an electromagnetic carrier signal or be copied from a physical entity such as a computer program product, a non-volatile electronic memory device (e.g., flash memory) or a record medium such as a CD-ROM or DVD. Typically, the processor(s) of the controller(s) may be coupled to both volatile memory and non-volatile memory. The computer program is stored in the non-volatile memory and may be executed by the processor(s) using the volatile memory for temporary storage of data or data and instructions. Examples of volatile memory include RAM, DRAM, SDRAM etc. Examples of non-volatile memory include ROM, PROM, EEPROM, flash memory, optical storage, magnetic storage, etc. The terms 'memory', 'memory medium' and 'storage medium' when used in this specification are intended to relate primarily to memory comprising both non-volatile memory and volatile memory unless the context implies otherwise, although the terms may also cover one or more volatile memories only, one or more non-volatile memories only, or one or more volatile memories and one or more non-volatile memories.

The algorithms and operations presented herein can be executed by any type or brand of computer or other apparatus. Various general-purpose systems may also be used with programs in accordance with the teachings herein, or it may prove convenient to construct more specialized apparatus to perform the required method steps. The required structure for a variety of these systems will be apparent to those of skill in the art, along with equivalent variations. In addition, the method/system is not described with reference to any particular programming language. It is appreciated that a variety of programming languages may be used to implement the teachings of the invention as described herein.

Examples of AI methods

The apparatus, system and method in any of the examples discussed herein, may use an Artificial Intelligence (AI) method including any of the example AI methods and techniques as described underneath and otherwise elsewhere herein.

An AI may be used that does not utilise Machine Learning (ML) such as in a knowledge-based approach wherein a defined set of rules is provided to a system and the system acts as per these rules and performs accordingly. Such a non-ML technique may use a list of rules to convert an input into an output. The process may be deterministic. The AI system may be tuned to produce the correct results. One implementation may be a series of 'if-then' expressions.

The AI method may use one or more ML techniques which may employ one or more ML algorithms. Any ML algorithm used herein may build a model based on sample data which may be referred to as 'training data'. The ML technique may be any ML technique including, but not limited to: Supervised Learning (SL); Unsupervised Learning (UL); Semi-Supervised Learning (SSL); Reinforcement Learning (RL), Deep Learning (DL).

A SL method may be represented by an algorithm and may build a mathematical model of a set of data that contains both the inputs and the desired outputs. In the mathematical model, each training example may be represented by an array or vector. This may be referred to as a 'feature vector'. The training data may be represented by a matrix. The SL technique may utilise an objective function. The objective function may be optimised in an iterative manner such that the SL technique learns a function for predicting an output associated with further inputs that may be different to the training inputs. An optimal objective function may allow the algorithm to correctly determine the output for inputs that were not a part of the training data. The SL method may use one or more different supervised learning algorithms including but not limited to active learning, classification and regression. Examples of algorithms used in supervised learning include but are not limited to regression analysis (i.e., linear regression, logistic regression, non-linear regression), decision trees, k-nearest neighbours, k-means clustering, neural networks, and support vector machines.

A UL method may build a model by taking a set of data that contains only inputs, and find structure in the data. Such structure may be any of, but not limited to, grouping or clustering of data points. The UL algorithm may therefore, learn from test data that has not been labelled, classified or categorized. UL algorithms may identify commonalities in the data and adapt its model based on the commonalities being present, or not, for each new piece of data.

An SSL method may utilise training data wherein a first portion of the data has inputs and expected outputs whilst a second portion only has inputs but no corresponding expected outputs, thus only some of the data sets in the training data comprise data labels.

An RL may use a (classical) computer agent that learns to perform a task through repeated trial and error interactions with a dynamic or interactive environment. The environment here the quantum computer and the inputs/outputs to the quantum computer system, such as, aspects of the driving EM field/s and the measured qubit outputs it produces. The computer agent learns from the actions and experiences of these interactions. The computer agent learns via interaction and feedback. The feedback allows the computer agent to make a series of decisions that maximize a reward metric for the task, which in this case is an optimum qubit readout. An RL method used herein may use a standard reinforcement learning model with measurable performance criteria where outputs are graded. The RL method may utilise a Markov decision process (MDP) to represent the environment. The RL method may use any one or more of: a value-based algorithm wherein a value function is attempted to be maximised; , a policy-based algorithm, either deterministic or stochastic, wherein the algorithm develops a strategy to gain maximum reward for future environment runs; a model-based algorithm wherein a virtual model is created for the computer agent to use in aiding the learning for the environment.

A DP is based on several layers of artificial neural networks, each of which applies different rules to transform the incoming data before sending it to the next layer. Such transformation may be but no limited to dimension reduction/increase and any mathematical operation on at least one element of the input vector. During each iteration, the input to the first layer is an instance from the training data set. The output of the last layer is the vector of target values that is used to create a EM profile.

Any of the ML models may be generated using a first set of data (training data) and optionally tested with a second set of data (test data) before the model is then used to predict the outcome of further sets of input data. The Models used by the ML may be any model including but not limited to any of Artificial Neural Networks (NN), decision trees, regression analysis and Bayesian networks. The AI may be run on any one or more computing apparatus such as a physical computer, optionally with one or more GPU- type processors running the AI; and/or or one or more virtual servers with similar components. Examples of computing apparatus for running the AI are presented elsewhere herein.

Optionally the AI method may use data scrubbing prior to using any of the data. This may involve any of the following: modifying and removing incomplete, incorrectly formatted, irrelevant or duplicated data. The scrubbing process may optionally convert data from one format to another format suitable for the AI, for example, converting text-based data to numeric values. Optionally, an Initial data set for generation the model may be split into two subsets via 'split validation': training data subset and test data subset. Alternatively, the method may use cross validation instead of split validation by splitting data into various combinations and testing each specific combination.

Optionally in some examples, a step of feature selection is performed to select which features to utilise and factor into the algorithm. For example, in one example the distance between the atoms in the register may be ignored for generating an ML model but the features selected are the total size and the average degree of the nodes in the graph. Optionally, data for the models may be rescaled using any of normalization and/or standardization. Optionally, the method may modify the ML model's hyperparameters, in other words the algorithm's learning settings rather than not the settings of the actual model. The hyperparameters control and impact how fast the model learns patterns and which patterns to identify and analyse.

Optionally, after running training data through the model, one or more metrics may be used to assess the model's performance. Metrics may include any of but not limited to: Area under the curve (AUC), Receiver Operating Characteristic (ROC), confusion matrix, recall, and accuracy, mean absolute error (MAR) and root mean square error (RMSE).

One example SL method for use with the methods and system presented herein is a regression analysis. The method may use a regression technique which uses independent and dependent variables. A basic, single independent variable Linear Regression (LR) may be used that may use a hyperplane applied to x-y training data values in two-dimensional space. The hyperplane acts as a flat regression trend line dissecting the data points. The linear regression line splits the training data to minimize the distance between the hyperplane and the observed values of the training data such that the aggregate distance of each point equates to the smallest possible distance to the hyperplane. The distance between the line and training data values is the residual error. A linear regression LR may be represented by the formula $y = bx + a$ wherein "y" represents the dependent variable; "x" represents the independent variable; "a" is the y-intercept point where the hyperplane crosses the y-axis; "b" dictates the steepness of the slope. Instead of a single independent variable LR, the method and system presented herein may use a multiple Linear Regression that uses a plurality of independent variables are represented by the formula: $y = a + b_1x_1 + b_2x_2 + b_3x_3 + b_4x_4....$ The independent variables are $x_1$, $x_2$, $x_3$, $x_4$ whilst the variable coefficients are $b_1$, $b_2$, $b_3$, $b_4$. Sums of x and y values from the training data may be used to solve for y-intercept and coefficient values. This formula can be used to make a prediction (y) using the X values from further data such as test data.

**Claims**

1. A method for generating one or more control signals for operating an analogue quantum computer, AQC; the AQC comprising a plurality of position-controlled matter-particles; wherein at least one control signal is for controlling an electromagnetic, EM, source for imparting EM radiation to the matter-particles;

   the method comprising using an artificial intelligence, AI, method to generate at least one control signal for the EM source; wherein the AI method is developed using at least one of:

   a) data output from applying previous EM radiation to the AQC; or
   b) data output from emulating, on a classical computer, the application of EM radiation to the AQC.

2. The method as claimed in claim 1, for operating the AQC for solving a combinatorial problem.

3. The method as claimed in claim 2 wherein the method is for operating the AQC for solving a graph problem, wherein a plurality of the matter-particles represents the nodes and/or the edges of

4. The method as claimed in any of claims 2 or 3 wherein the AI method comprises at least one of:

   i) a model trained using a supervised learning algorithm
   ii) a model trained using a reinforcement learning algorithm.

5. The method as claimed in claim 4 as dependent upon claim 3 further comprising:

   inputting data associated with the graph problem and the graph into the model; and,
   outputting from the model, data associated with the control signals for controlling the EM source.

6. The method as claimed in claim 5 wherein the EM radiation imparted on the matter particles is for transitioning the matter-particles between a first atomic state and a second state; the data output from the model comprises data associated with at least one of:

   i) Rabi frequency associated with the first and second atomic states;
   ii) detuning of the EM source wavelength from the transition frequency of first and second atomic states;
   iii) the phase of the EM source.

7. The method as claimed in claims 5 or 6 wherein the data associated with the control signals for controlling the EM source, that are output from the model, comprise data representing a time-sequence of values of the EM radiation.

8. The method as claim 7 wherein:

   i) the first state is a ground state;
   ii) the second state is a Rydberg state.

9. The method as claimed in any preceding claim wherein the AQC comprises a neutral atom quantum computer.

10. The method as claimed in any of claims 3-9, as dependent upon claim 3 wherein:
    the graph is a first graph associated with a first spatial configuration of the position-controlled matter-particles:

    the AI method comprises a model;
    the method comprising training the model using training data comprising any one or more of:

       A) data associated with one or more second graphs different from the first graph;
       B) data associated with the first graph and a second spatial configuration of the position-controlled matter-particles that is different to the first spatial configuration of the position-controlled matter particles.

11. The method as claimed in claim 10 wherein the training data comprises a plurality of data subsets, each subset comprising:

    data associated with the graph problem and at least one of the second graphs and,
    data associated with the EM radiation for the said second graph for imparting to the AQC for encoding the graph problem onto the matter particles.

12. The method as claimed in claim 10 wherein training the model comprises selecting a machine learning method from a plurality of machine learning methods based on a criteria associated with any one or more of:

    i) graph size;
    ii) graph order;
    iii) number of matter-particles to represent the graph problem;
    iv) matter-particle position configuration;
    v) EM pulses for each second graph in the training data set:
    vi) the problem to be solved
    vii) time budget to generate the training data set.
    viii) to which class the graph belongs.

**13.** The method as claimed in any of claims 10-12 wherein training the model comprises:

i) setting a register of the matter particles wherein the positions of the matter particles in the register is associated with the nodes of the second graph;

ii) running a plurality of quantum simulations on the AQC and/or emulations of the AQC, each simulation or emulation comprising: a) inputting a training EM signal; and, b) determining which matter particles are excited after the input of the training EM signal; each quantum simulation or emulation comprising a different training EM signal to the training EM signals of the other quantum simulations or emulations;

iii) selecting one or more of the quantum simulations and/or emulations from the plurality of quantum simulations and/or emulations based on the said determinations of excited matter particles;

iv) training the model using the selected one or more quantum simulations and/or emulations.

**14.** A method for training an AI model for use with an analogue quantum computer, AQC; the AQC comprising a plurality of position-controlled matter-particles;

the method comprising:

i) setting a register of the matter particles wherein the positions of the matter particles in the register is associated with the nodes of a graph;

ii) running a plurality of quantum simulations on the AQC and/or classical computer emulations of the AQC; each simulation or emulation comprising:

a) inputting a training Electro Magnetic, EM, signal; and,

b) determining the which matter particles are excited after the input of the training EM signal; each quantum simulation or emulation comprising a different EM signal to the EM signals of the other quantum simulations or emulations;

iii) selecting one or more of the quantum simulations and/or emulations from the plurality of quantum simulations and/or emulations based on the said determinations of excited matter particles;

iv) training the model using the selected one or more quantum simulations and/or emulations.

**15.** A system for generating one or more control signals for operating an analogue quantum computer, the system comprising a processor and a memory, the memory comprising instructions that are executable by the processor to generate the control signals according to the method of any of claims 1-12.

Fig. 1a,
Prior art

Fig. 1b,
Prior art

Fig. 1c,
Prior art

EP 4 290 423 A1

Fig. 2a

Fig. 2b

Fig. 3a

Fig. 3b

Fig. 3c

E

R _____    _____  | 1 >

π

g _____●_____    _____●_____  | 0 >

h _____    _____

C              T

## Fig. 4a

E

R _____●_____    - - - - - -   | 1 >

X
π

g _____    _____●_____  | 0 >

h _____    _____

C              T

## Fig. 4b

<table>
<thead>
<tr><th></th><th>P1</th><th>P2</th><th>P3</th><th>P4</th><th>P5</th></tr>
</thead>
<tbody>
<tr><td>P1</td><td>0</td><td>1</td><td>0</td><td>1</td><td>0</td></tr>
<tr><td>P2</td><td>-</td><td>0</td><td>0</td><td>1</td><td>0</td></tr>
<tr><td>P3</td><td>-</td><td>-</td><td>0</td><td>0</td><td>1</td></tr>
<tr><td>P4</td><td>-</td><td>-</td><td>-</td><td>0</td><td>1</td></tr>
<tr><td>P5</td><td>-</td><td>-</td><td>-</td><td>-</td><td>0</td></tr>
</tbody>
</table>

<u>Fig. 5a</u>

<u>Fig. 5b</u>

100

102

<u>Fig. 5c</u>

104

102

<u>Fig. 5d</u>

106

102

Fig. 6b

Fig. 6a

Fig. 6c

EP 4 290 423 A1

Fig. 7a

Ω

116

t

Fig. 7b

δ

116

t

Fig. 8

Fig. 9a

Fig. 9b

Fig. 10

Fig. 11

EP 4 290 423 A1

## Fig. 12

320

**318**

| Instance | X₁ | ... | Xₙ | Y₁ | ... | Yₘ |
|----------|-----|-----|-----|-----|-----|-----|
| 1 | 3 | ... | 9.6 | 0.0 | ... | 5 |
| 2 | 10 | ... | 2.1 | 0.1 | ... | 5 |
| ⋮ | ⋮ | ⋮ | ⋮ | ⋮ | ⋮ | ⋮ |
| 999 | 3 | ... | 7.0 | 4.0 | ... | 5 |
| 1000 | 4 | ... | 6.5 | 0.0 | ... | 5 |

**322**

**324a**

| Instance | X₁ | ... | Xₙ |
|----------|-----|-----|-----|
| 1 | 3 | ... | 9.6 |
| 2 | 10 | ... | 2.1 |
| ⋮ | ⋮ | ⋮ | ⋮ |
| 999 | 3 | ... | 7.0 |
| 1000 | 4 | ... | 6.5 |

**324b**

| Instance | Y₁ | ... | Yₘ |
|----------|-----|-----|-----|
| 1 | 0.0 | ... | 5 |
| 2 | 0.1 | ... | 5 |
| ⋮ | ⋮ | ⋮ | ⋮ |
| 999 | 4.0 | ... | 5 |
| 1000 | 0.0 | ... | 5 |

**326**

**328**

Fig. 13

Fig. 14

## Fig. 15

S100

Provide an ML model

**Start**

S102 — Generate training instance set

S104 — What is your model ?

Supervised Learning

S105 — Get optimal pulse parameters for each training instance

S106 — Train the ML model with the optimal pulse parameters for the generated (new) training instance set

S108 — Generate new instances

S110 — Get pulse parameters for each new training instance with the trained ML model

S112 — Calculate the quality of the solutions on the new generated instances

S114 — Stopping Criterion?

No → S118 — Add a subset of new instances to the training set with their related pulse parameters

Yes → S116 — **End** — The ML model is trained and ready to be used on new, unseen instances

Reinforcement Learning

S120 — Choose an instance from the training set and guess the related pulse parameters

S122 — Calculate the quality of the solution with the predicted parameters and on the chosen instance

S124 — Stopping Criterion?

No → S126 — Update ML Model with the penalties/awards coefficients

Yes →

S127 — New Instances?

No →

Yes →

Fig. 16

Fig. 17

EP 4 290 423 A1

# EUROPEAN SEARCH REPORT

**Application Number**

EP 22 30 5819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BENTLEY C D B ET AL: "Gaussian processes for choosing laser parameters for driven, dissipative Rydberg aggregates", ARXIV.ORG, CORNELL UNIVERSITY LIBRARY, 201 OLIN LIBRARY CORNELL UNIVERSITY ITHACA, NY 14853, 27 June 2018 (2018-06-27), XP081142388, DOI: 10.1088/1361-6455/AADEAF * abstract; figure 1 * * section 2.1 * * section 4.1, lines 5-6 * * section 4.1, lines 10-13 * * section 6, lines 1-3 * * page 2, line 26 – line 33 * * page 2, line 36 – line 42 * * page 5, line 25 – line 27 * * page 7, line 1 – line 4 * * page 7, line 21 – line 25 * * equations (4), (5) * | 1-15 | INV. G06N10/40 G06N20/20 G06N3/08 ADD. G06N3/04 G06N20/10 |
| A | MEKENA METCALF ET AL: "Towards AI-enabled Control for Enhancing Quantum Transduction", ARXIV.ORG, CORNELL UNIVERSITY LIBRARY, 201 OLIN LIBRARY CORNELL UNIVERSITY ITHACA, NY 14853, 16 September 2020 (2020-09-16), XP081764833, * the whole document * | 1-15 | **TECHNICAL FIELDS SEARCHED (IPC)** G06N |

–/––

The present search report has been drawn up for all claims

| Place of search | Date of completion of the search | Examiner |
|---|---|---|
| The Hague | 10 November 2022 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 22 30 5819

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Marin Bukov ET AL: "Reinforcement Learning in Different Phases of Quantum Control", , 8 September 2017 (2017-09-08), pages 1-20, XP055515469, arXiv.org Retrieved from the Internet: URL:https://arxiv.org/abs/1705.00565v2 [retrieved on 2018-10-15] * the whole document * ----- | 1-15 | |

**TECHNICAL FIELDS SEARCHED (IPC)**

The present search report has been drawn up for all claims

| Place of search | Date of completion of the search | Examiner |
|---|---|---|
| The Hague | 10 November 2022 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LOUIS-PAUL HENRY et al.** Quantum evolution kernel: Machine learning on graphs with programmable arrays of qubits. *arXiv:2107.03247v1*
- **K. MITARAI et al.** Quantum Circuit Learning. *arXiv:1803.00745v3*
- **HANNES PICHLER et al.** Quantum Optimization for maximum Independent Set Using Rydberg Atom Arrays. *arXiv:1808.10816v1*
- **GRAHAM et al.** Demonstration of multi-qubit entanglement and algorithms on a programmable neutral atom quantum computer. *arXiv: 2112.14589*
- Harold J Metcalf and Peter van der Straten. Laser cooling and trapping of atoms. *JOSA B,* 2003, vol. 20 (5), 887-908
- *Nature,* September 2018, vol. 561 (7721), 79-82